# EUROPEAN PATENT SPECIFICATION

(11) **EP 3 312 667 B1**
(45) Date of publication and mention of the grant of the patent: **21.08.2019**
(21) Application number: 16811541.8
(22) Date of filing: 09.06.2016
(51) Int. Cl.: G02F 1/1337, C09K 19/30, C09K 19/54, G02F 1/13, G02F 1/1368, C09K 19/56, G02F 1/1343, G02F 1/137, G02F 1/1341

(54) **LIQUID CRYSTAL DISPLAY DEVICE AND METHOD FOR MANUFACTURING SAME**
FLÜSSIGKRISTALLANZEIGEVORRCHTUNG UND VERFAHREN ZUR HERSTELLUNG DAVON
DISPOSITIF D'AFFICHAGE À CRISTAUX LIQUIDES ET SON PROCÉDÉ DE FABRICATION

(30) Priority: 19.06.2015 JP 2015123850
(43) Date of publication of application: 25.04.2018
(73) Proprietor: DIC Corporation, Tokyo 174-8520 (JP)
(72) Inventor: KURISAWA Kazuki, Kitaadachi-gun Saitama 362-8577 (JP); HAYASHI Masanao, Kitaadachi-gun Saitama 362-8577 (JP)
(74) Representative: Adam, Holger
(86) International application number: PCT/JP2016/067217
(87) International publication number: WO 2016/204066

(56) References cited:
- WO-A1-2013/161669
- WO-A1-2014/024648
- WO-A1-2014/123056
- US-A1- 2012 169 980
- US-A1- 2013 287 970
- US-A1- 2014 085 591
- SU,CHUN-WEI ET AL.: 'Analysis and Implementation of PI Less Technology Applied in TFT LCD Displays' IDW'10 - PROCEEDINGS OF THE 17TH INTERNATIONAL DISPLAY WORKSHOPS vol. 1, 2010, pages 17 - 20, XP009507892

## Description

### Technical Field

The present invention relates to a liquid crystal display device useful as a constituent member of liquid crystal TV or the like, and to a method for manufacturing the same.

### Background Art

Liquid crystal display devices have been used for watches and electronic calculators, various measuring apparatuses, automotive panels, word processors, electronic notebooks, printers, computers, televisions, watches, advertising displays, etc. Typical examples of a liquid crystal display mode include a TN (twisted nematic) mode, a STN (super twisted nematic) mode, a vertical alignment (VA) mode and an IPS (in-plane switching) mode using TFT (thin-film transistors), and the like. Liquid crystal compositions used for these liquid crystal display devices are required to have stability to external factors such as moisture, air, heat, light, and the like, exhibit a liquid crystal phase within as wide a temperature range as possible including room temperature as a center, and have low viscosity and low drive voltage. Further, each of the liquid crystal compositions is composed of several types to several tens types of compounds in order to have optimum values of dielectric anisotropy (Δε) and refractive index anisotropy (Δn) for a display device.

A VA-mode display uses a liquid crystal composition having negative Δε and is widely used for liquid crystal TV etc. On the other hand, low-voltage driving, fast response, and a wide operating temperature range are required for all driving methods. That is, a large absolute value of Δε, low viscosity (η), and a high nematic-isotropic liquid phase transition temperature (Tₙᵢ) are required. Also, in view of setting of Δn × d which is the product of Δn and a cell gap (d), it is necessary to adjust Δn of a liquid crystal composition within a proper range according to the cell gap. In addition, when a liquid crystal display device is applied to a television or the like, fast response is regarded as important, and thus a liquid crystal composition having low rotational viscosity (γ₁) is required.

On the other hand, a MVA (multi-domain vertical alignment)-mode liquid crystal display device is widely used, in which in order to improve the viewing angle characteristics of the VA-mode display, the alignment direction of liquid crystal molecules in a pixel is divided into a plurality of directions by providing projecting structures on a substrate. The MVA-mode liquid crystal display device is excellent in the viewing angle characteristics, but has the problem that portions near and far from the projecting structures on the substrate have different response speeds of the liquid crystal molecules, and thus overall response speed becomes unsatisfactory due to the effect of the liquid crystal molecules with a low response speed far from the projecting structures. There is also the problem of decreasing the transmittance due to the projecting structures. In order to solve the problems, a PSA liquid crystal display device (polymer sustained alignment, including a SP liquid crystal display device (polymer stabilized)) has been developed as a method in which unlike in a usual MVA-mode liquid crystal display device, a uniform pre-tilt angle is imparted to divided pixels without providing a non-transmissive projecting structure in a cell. The PSA liquid crystal display device is manufactured by adding a small amount of a polymerizable compound to a liquid crystal composition, introducing the liquid crystal composition in a liquid crystal cell, and then polymerizing the polymerizable compound in the liquid crystal composition by irradiation with active energy rays while applying a voltage between electrodes. Therefore, a proper pre-tilt angle can be imparted to the divided pixels, resulting in improvement in contrast due to improvement in transmittance and the achievement of high-speed response due to impartment of a uniform pre-tilt angle (for example, refer to Patent Literature 1).

Although in the PSA liquid crystal display device, vertical alignment films are formed on two substrates, a liquid crystal display device has been also proposed, in which the manufacturing process is simplified by avoiding the step of forming the vertical alignment films, and thus the yield can be improved, resulting in reduction in cost (for example, refer to Patent Literature 2).

It is also described that in the liquid crystal display device of this mode, like in the PSA liquid crystal display device, the contrast can be improved because transmittance can be improved, and high-speed response can also be expected. However, display unevenness due to the manufacturing process may occur in the manufactured device, and thus a method using a specified liquid crystal material is disclosed as a method for improving the display unevenness (for example, refer to Patent Literature 3).

In the liquid crystal display device in which the cost can be reduced by simplifying the step of forming vertical alignment films, a polymer formed by polymerizing a polymerizable compound in a liquid crystal composition is formed directly as an alignment control layer on a transparent electrode substrate on which a vertical alignment film is not formed, and thus the alignment control layer is required to be stable and is not changed over a long period of time from the viewpoint of alignment uniformity and alignment stability of liquid crystal molecules in the liquid crystal device.

### Citation List

### Patent Literature

PTL 1: Japanese Unexamined Patent Application Publication No. 2002-357830
PTL 2: Japanese Unexamined Patent Application Publication No. 2004-302061
PTL 3: WO2014/123056A1

### Summary of Invention

### Technical Problem

The present invention has been achieved in consideration of the situation described above, and a problem is to provide a liquid crystal display device manufactured by simplifying a step of forming a vertical alignment film on an electrode substrate and forming an alignment control layer on an electrode substrate by polymerizing a polymerizable compound in a liquid crystal composition, wherein the alignment control layer formed on the electrode substrate is improved in adhesion to the electrode substrate, and alignment stability of liquid crystal molecules is enhanced by suppressing a change in the alignment control layer with time, resulting in improvement in display quality and reliability, and also provide a method for manufacturing the liquid crystal display device. Solution to Problem

As a result of research on various liquid crystal compositions and polymerizable compounds in liquid crystal compositions in order to solve the problem, the inventors of the present invention found that in a mode formed by adding a polymerizable compound to a liquid crystal composition, introducing the liquid crystal composition in a liquid crystal cell, and then polymerizing the polymerizable compound in the liquid crystal composition by irradiation with active energy rays while applying a voltage between electrodes, the problem can be solved by using a combination of specified compounds as a liquid crystal compound and a polymerizable compound without providing a vertical alignment film on one or both of the substrates constituting the liquid crystal cell, leading to the achievement of the present invention.

That is, the present invention provides a liquid crystal display device including a liquid crystal layer which contains a liquid crystal composition and which is held between a first substrate having a common electrode and a second substrate having a plurality of pixels and pixel electrodes of the respective pixels, one or both of the first substrate and the second substrate having, without having an alignment film, an alignment control layer formed by using one or more tri- or higher-functional (meth)acrylate compounds and one or more di- or mono-functional (meth)acrylate compounds.

The liquid crystal composition contains a compound represented by general formula (I) below 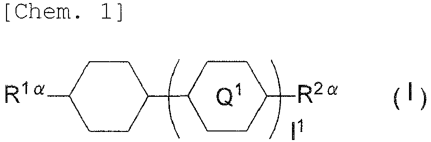 (in the formula, R^{1α} and R^{2α} each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; Q¹ represents a 1,4-phenylene group or a trans-1,4-cyclohexylene group; I¹ represents 1 or 2, and when I¹ is 2, two Q¹ may be the same or different) and a compound represented by general formula (II) below 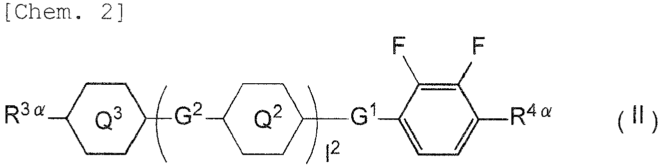 (in the formula, R^{3α} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; R^{4α} represents an alkyl group having 1 to 8 carbon atoms, an alkenyl group having 4 to 8 carbon atoms, an alkoxy group having 1 to 8 carbon atoms, or an alkenyloxy group having 3 to 8 carbon atoms; Q² and Q³ each independently represent a 1,4-phenylene group or a trans-1,4-cyclohexylene group; G¹ and G² each independently represent a single bond, -CH₂CH₂-, -CH₂O-, -OCH₂-, -CF₂O-, or -OCF₂-; and I² represents 0, 1, or 2, and when I² is 2, two each of Q² and G² may be the same or different).

Also, the present invention provides a method for manufacturing a liquid crystal display device including a liquid crystal layer which contains a liquid crystal composition and which is held between a first substrate having a common electrode and a color filter layer and a second substrate having a plurality of pixels and pixel electrodes of the respective pixels, each of the pixels having two or more regions having different pre-tilt directions. The method includes holding, between the first substrate and the second substrate without providing an alignment film on one or both of the substrates, a liquid crystal-containing polymerization composition containing a compound represented by general formula (I) below 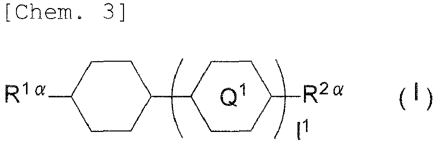 (in the formula, R^{1α} and R^{2α} each independently represent an alkyl group having 1 to 8 carbon atoms, and alkenyl group having 2 to 8 carbon atoms, an alkoxy group having 1 to 8 carbon atoms, or an alkenyloxy group having 2 to 8 carbon atoms; Q¹ represents a 1,4-phenylene group or a trans-1,4-cyclohexylene group; and I¹ represents 1 or 2, and when I¹ is 2, two Q¹ may be the same or different) and a compound represented by general formula (II) below 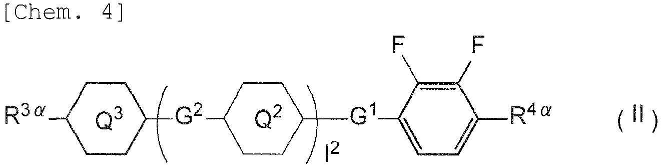
(in the formula, R^{3α} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; R^{4α} represents an alkyl group having 1 to 8 carbon atoms, an alkenyl group having 4 to 8 carbon atoms, an alkoxy group having 1 to 8 carbon atoms, or an alkenyloxy group having 3 to 8 carbon atoms; Q² and Q³ each independently represent a 1,4-phenylene group or a trans-1,4-cyclohexylene group; G¹ and G² each independently represent a single bond, -CH₂CH₂-, -CH₂O-, -OCH₂-, -CF₂O-, or -OCF₂-; I² represents 0, 1, or 2, and when I² is 2, two each of Q² and G² may be the same or different), one or more tri- or higher-functional (meth)acrylate compounds, and one or more di- or mono-functional (meth)acrylate compounds; and
polymerizing the two or more polymerizable compounds between the pixel electrode and the common electrode by irradiation with active energy rays while applying a voltage for imparting a pre-tilt angle to liquid crystal molecules in the liquid crystal-containing polymerization composition, and, at the same time, forming an alignment control layer between the liquid crystal layer and each of the first substrate and the second substrate by using the liquid crystal-containing polymerization composition as the liquid crystal composition.

### Advantageous Effects of Invention

According to the present invention, there is provided a liquid crystal display device which suppresses the occurrence of image sticking and dropping marks during manufacture without degrading the characteristics such as dielectric anisotropy, viscosity, nematic phase upper limit temperature, rotational viscosity (γ₁), etc. and which has good alignment stability with time due to an alignment control layer having good adhesion to a substrate and significant suppression of changes with time. Also, a method for manufacturing the liquid crystal display device is provided.

### Brief Description of Drawings

Fig. 1 is a schematic perspective view showing a liquid crystal display device according to an embodiment of the present invention.
Fig. 2 is a schematic plan view showing an example of a slit electrode (comb-shaped electrode) used in a liquid crystal display device of the present invention.
Fig. 3 is a drawing showing the definition of a pre-tilt angle in a liquid crystal display device of the present invention.

### Description of Embodiments

A liquid crystal display device and a method for manufacturing the same according to embodiments of the present invention are described below.

The embodiments are made to specifically describe the invention in order to make the gist of the invention more well understandable, and the present invention is not limited to the embodiments unless otherwise specified.

### (Liquid crystal display device)

A liquid crystal display device is one that has a liquid crystal layer containing a liquid crystal composition and held between a pair of electrodes, and is based on a principle that liquid crystal molecules in the liquid crystal layer are caused to function as an optical switch by Freedericksz transition induced by applying a voltage to the liquid crystal layer. In view of this point, a known common technique can be used.

Two substrates each have an electrode for inducing Freedericksz transition of liquid crystal molecules, and a usual vertical alignment liquid crystal display device generally uses a method in which a voltage is vertically applied between the two substrates. In this case, one of the electrodes serves as a common electrode, and the other electrode serves as a pixel electrode. The most typical example of this method is described below.

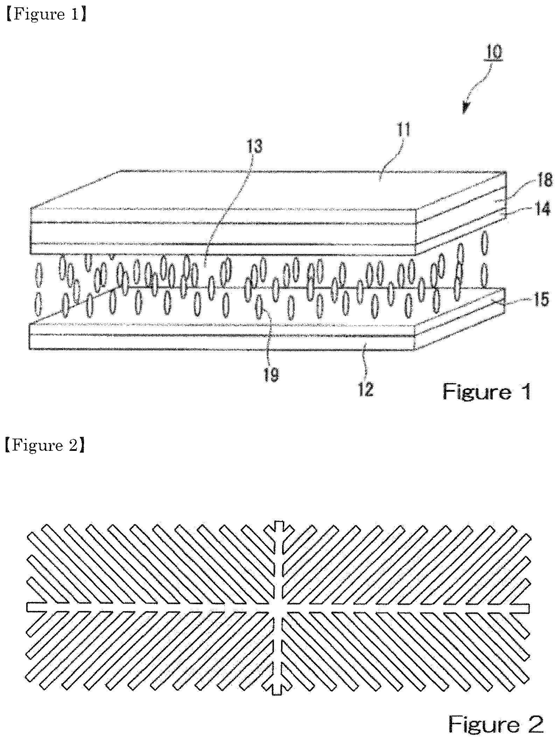

Fig. 1 is a schematic perspective view showing a liquid crystal display device according to an embodiment of the present invention.

A liquid crystal display device 10 of the embodiment is schematically configured by a first substrate 11, a second substrate 12, a liquid crystal layer 13 containing a liquid crystal composition and held between the first electrode 11 and the second electrode 12, a common electrode 14 provided on a surface of the first substrate 11 so as to face the liquid crystal layer 13, a pixel electrode 15 provided on a surface of the second substrate 12 so as to face the liquid crystal layer 13, and a color filter 18 provided between the first substrate 11 and the common electrode 14.

A glass substrate or plastic substrate is used as each of the first substrate 11 and the second substrate 12.

Examples of the plastic substrate used include substrates composed of resins such as an acrylic resin, a methacrylic resin, polyethylene terephthalate, polycarbonate, a cyclic olefin resin, and the like.

The common electrode 14 and the pixel electrode 15 are generally composed of a material with transparency, such as indium-added tin oxide (ITO) or the like.

The pixel electrode 15 is disposed in a matrix shape on the second substrate 12. The pixel electrode 15 is controlled by a drain electrode of an active element represented by a TFT switching element (not shown), and the TFT switching element has a matrix of gate lines serving as address signal lines and source lines serving as data lines.

The pixel electrode 15 has two or more regions having different pre-tilt angles of liquid crystal molecules pixels in each of the pixels. In this way, when the pre-tilt angle of liquid crystal molecules is specified, and a pixel is divided so that the falling direction of liquid crystal molecules in a pixel is divided into plural regions, viewing-angle characteristics are improved.

In dividing a pixel, for example, a pixel electrode having slits (portions in which an electrode is not formed) having a stripe-shaped or V-shaped pattern may be provided in each pixel.

Fig. 2 is a schematic plan view showing a typical form of a slit electrode (comb-shaped electrode) when a pixel is divided into four regions. The slit electrode has comb-shaped slits arranged in four directions from a center of a pixel, and thus with no voltage applied, the liquid crystal molecules in a pixel are aligned substantially vertically to the substrates, while with a voltage applied, the liquid crystal molecular directors are directed in four different directions and come close to horizontal alignment. As a result, the alignment direction of liquid crystal molecules in a pixel can be divided into plural directions, thereby causing a very wide viewing angle characteristic.

The pixel electrode 15 of the liquid crystal display device 10 preferably has slits (slit electrode).

Other than the method of providing the slit electrode, a method of providing a structure such as a linear projection or the like in a pixel, a method of providing an electrode other than the pixel electrode and the common electrode, and the like (these methods are not shown in the drawings) can be used as a method for diving a pixel, and the method of providing a structure is preferred. The structure may be provided on at least one of the first substrate 11 and the second substrate 12 or provided on both substrates.

However, a configuration using the slit electrode is preferred in view of transmittance and the ease of manufacture. The slit electrode has no driving force to liquid crystal molecules with no voltage applied, and thus a pre-tilt angle cannot be given to liquid crystal molecules. However, in the present invention, a pre-tilt angle can be given by providing an alignment control layer described below, and a wide viewing angle can be achieved by pixel division performed by combination with a slit electrode for dividing a pixel.

In the present invention, "having a pre-tilt angle" represents a state in which with no voltage applied, the direction of liquid crystal molecular directors is slightly different from a direction vertical to a substrate surface (a surface of each of the first substrate 11 and the second substrate 12 on the side adjacent to the liquid crystal layer 13).

The liquid crystal display device of the present invention is a vertical alignment (VA)-mode liquid crystal display device, and thus, with no voltage applied, the liquid crystal molecular directors are aligned substantially vertically to the substrate surface. In order to vertically align liquid crystal molecules in the VA-mode liquid crystal display device, a vertical alignment film of polyimide, polyamide, polysiloxane, or the like is generally disposed between the first substrate and the liquid crystal layer and between the second substrate and the liquid crystal layer. However, in the liquid crystal display device of the present invention, at least one of the substrates does not have such a vertical alignment film. However, if one of the substrates has the vertical alignment film, it is possible to use, for example, a transparent organic material such as polyimide, polyamide, BCB (benzocyclobutene polymer), polyvinyl alcohol, or the like. In the liquid crystal display device of the present invention, like in the PSA-mode liquid crystal display device, a proper pre-tilt angle is imparted by polymerizing a polymerizable compound in the liquid crystal composition under irradiation with active energy rays such as ultraviolet light or the like in a state in which the liquid crystal molecules are slightly tilted by applying a voltage between the electrodes. However, in the liquid crystal display device of the present invention, the alignment control layer is formed by polymerizing a polymerizable compound described in detail below and used as the polymerizable compound.

In the present invention, "liquid crystal molecules are substantially vertically aligned" represents a state in which the directors of vertically aligned liquid crystal molecules are given a pre-tilt angle and slightly fall from the vertical direction. When the liquid crystal molecules are completely vertically aligned, the angle formed by the direction completely parallel to the substrate surface and the direction of liquid crystal molecule directors is 90°, while when the liquid crystal molecules are completely homogeneously aligned (aligned horizontally to the substrate surface), the angle is 0°. When the liquid crystal molecules are substantially vertically aligned, the angle is preferably 89° to 85° and more preferably 89° to 87°.

In order to form the alignment control layer of the liquid crystal display device of the present invention, at least one or more tri- or higher-functional (meth)acrylate compounds used as a first polymerizable compound and one or more di- or mono-functional (meth)acrylate compounds used as a second polymerizable compound are together used as the polymerizable compound.

The tri- or higher-functional (meth)acrylate compounds used as the first polymerizable compound represent polymerizable compounds having three or more (meth)acryloyloxy groups, and examples thereof include a compound represented by general formula (XOa). 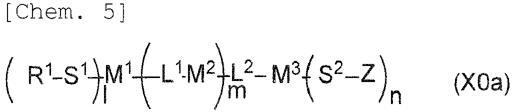
(In the formula, Z represents a hydrogen atom, an alkyl group having 1 to 8 carbon atoms, a halogenated alkyl group having 1 to 8 carbon atoms, an alkoxy group having 1 to 8 carbon atoms, a halogenated alkoxy group having 1 to 8 carbon atoms, a halogen, a cyano group, a nitro group, or R², S¹ and S² each independently represent an alkylene group having 1 to 12 carbon atoms or a single bond, one -CH₂- or two or more unadjacent -CH₂- in the alkylene group may be substituted by -O-, -COO-, -OCO-, or -OCOO-;
R¹ and R² each independently represent a hydrogen atom or any one of formula (R-1) to formula (R-15);

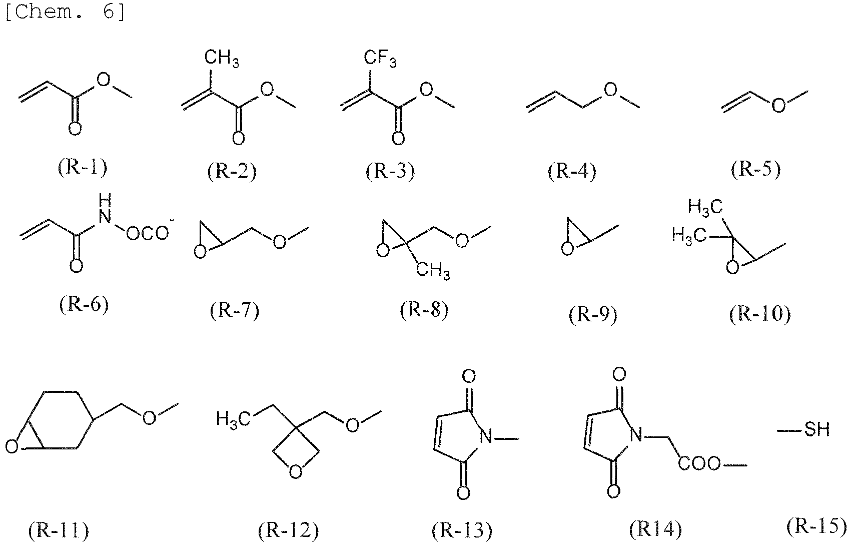

L¹ and L² each independently represent a single bond, - O-, -S-, -CH₂-, -OCH₂-, -CH₂O-, -CO-, -C₂H₄-, -COO-, -OCO-, - OCOOCH₂-, -CH₂OCOO-, -OCH₂CH₂O-, -CO-NR^{a}-, -NR^{a}-CO-, -SCH₂-, - CH₂S⁻, -CH=CR^{a}-COO-, -CH=CR^{a}-OCO-, -COO-CR^{a}=CH-, -OCO-CR^{a}=CH-, -COO-CR^{a}=CH-COO-, -COO-CR^{a}=CH-OCO-, -OCO-CR^{a}=CH-COO-, -OCO-CR^{a}=CH-OCO-, -COOC₂H₄-, -OCOC₂H₄-, -C₂H₄OCO-, -(CH₂)ⱼ-C(=O)-O-, -(CH₂)ⱼ-O-(C=O)-, -O-(C=O)-(CH₂)ⱼ-, -(C=O)-O-(CH₂)ⱼ-, - CH₂OCO-, -COOCH₂-, -OCOCH₂-, -CH=CH-, -CF=CF-, -CF=CH-, - CH=CF-, -CF₂-, -CF₂O-, -OCF₂-, -CF₂CH₂-, -CH₂CF₂-, -CF₂CF₂-, or -C≡C- (wherein R^{a} each independently represent a hydrogen atom or an alkyl group having 1 to 4 carbon atoms, and j represents an integer of 1 to 4);
M¹ and M³ each independently represent an aromatic ring or an aliphatic ring;
M² represents a 1,4-phenylene group, a 1,4-cyclohexylene group, a pyridine-2,5-diyl group, a pyrimidine-2,5-diyl group, a naphthalene-2,6-diyl group, a naphthalene-1,4-diyl group, a tetrahydronaphthalene-2,6-diyl group, or a 1,3-dioxane-2,5-diyl group;
M¹, M², and M³ may be each independently unsubstituted or substituted by an alkyl group having 1 to 8 carbon atoms, a halogenated alkyl group having 1 to 8 carbon atoms, an alkoxy group having 1 to 8 carbon atoms, a halogen, a cyano group, or a nitro group;
1 and n each independently represent an integer of 0, 1, 2, or 3, 1 + n represents 3 or more, when 1 represents 0, Z represents any one of the groups of the formula (R-1) to the formula (R-15), and when n represents 0, R¹ represents any one of the groups of the formula (R-1) to the formula (R-15); and
m represents an integer of 0 to 4, when a plurality of each of R¹, R², Z, S¹, and S² are present, they may be the same or different, when a plurality of each of L¹ and M² are present, they may be the same or different, and at least one L¹ represents a single bond.)

In the specification, "(meth)acrylate" represents both acrylate and methacrylate. Similarly, "(meth)acryloyl group" represents both an acryloyl group (H₂C=CH-CO-) and a methacryloyl group (H₂C=C(CH₃)-CO-).

Also, "-COO-" represents "-C(=O)-O-", and "-OCO-" represents "-O-C(=O)-" unless otherwise specified.

In the general formula (XOa), Z represents a hydrogen atom, an alkyl group having 1 to 8 carbon atoms, a halogenated alkyl group having 1 to 8 carbon atoms, an alkoxy group having 1 to 8 carbon atoms, a halogenated alkoxy group having 1 to 8 carbon atoms, a halogen, a cyano group, a nitro group, or R², but is preferably a hydrogen atom, an alkyl group having 1 to 3 carbon atoms, a halogenated alkyl group having 1 to 3 carbon atoms, an alkoxy group having 1 to 3 carbon atoms, a halogenated alkoxy group having 1 to 3 carbon atoms, a halogen, a cyano group, or R². S¹ and S² each independently represent an alkylene group having 1 to 12 carbon atoms or a single bond, and one -CH₂- or two or more unadjacent -CH₂- in the alkylene group may be substituted by -O-, -COO-, -OCO-, or - OCOO-, but is each independently preferably an alkylene group having 1 to 3 carbon atoms, an alkylene group having 3 to 10 carbon atoms in which one -CH₂- or two or more unadjacent -CH₂- in the alkylene group is substituted by -O-, or a single bond, and more preferably a single bond. R¹ and R² each independently represent a hydrogen atom or any one of the formula (R-1) to the formula (R-15), but is preferably the formula (R-1) or the formula (R-2). L¹ and L² each independently represent a single bond, -O-, -S-, -CH₂-, -OCH₂-, -CH₂O-, -CO-, -C₂H₄-, -COO-, -OCO-, -OCOOCH₂-, - CH₂OCOO-, -OCH₂CH₂O-, -CO-NR^{a}-, -NR^{a}-CO-, -SCH₂-, -CH₂S-, - CH=CR^{a}-COO-, -CH=CR^{a}-OCO-, -COO-CR^{a}=CH-, -OCO-CR^{a}=CH-, -COO-CR^{a}=CH-COO-, -COO-CR^{a}=CH-OCO-, -OCO-CR^{a}=CH-COO-, -OCO-CR^{a}=CH-OCO-, -COOC₂H₄-, -OCOC₂H₄-, -C₂H₄OCO-, -(CH₂)ⱼ-C(=O)-O-, - (CH₂)ⱼ-O-(C=O)-, -O-(C=O)-(CH₂)ⱼ-, -(C=O)-O-(CH₂)ⱼ-, -CH₂OCO-, -COOCH₂-, -OCOCH₂-, -CH=CH-, -CF=CF-, -CF=CH-, -CH=CF-, -CF₂-, -CF₂O-, -OCF₂-, -CF₂CH₂-, -CH₂CF₂-, -CF₂CF₂-, or -C≡C-(wherein R^{a} each independently represent a hydrogen atom or an alkyl group having 1 to 4 carbon atoms, and j represents an integer of 1 to 4), but is preferably a single bond, -O-, -CH₂-, -OCH₂-, -CH₂O-, -C₂H₄-, -COO-, -OCO-, -CH=CH-COO-, - CH=CH-OCO-, -COO-CH=CH-, -OCO-CH=CH-, -COO-CH=CH-COO-, -COO-CH=CH-OCO-, -OCO-CH=CH-COO-, -OCO-CH=CH-OCO-, -COOC₂H₄-,-OCOC₂H₄-, -C₂H₄OCO-, or -C≡C-. M¹ and M³ each independently represent an aromatic ring or an aliphatic ring, but is preferably an aromatic ring. M² represents a 1,4-phenylene group, a 1,4-cyclohexylene group, a pyridine-2,5-diyl group, a pyrimidine-2,5-diyl group, a naphthalene-2,6-diyl group, a naphthalene-1,4-diyl group, a tetrahydronaphthalene-2,6-diyl group, or a 1,3-dioxane-2,5-diyl group, but is preferably a 1,4-phenylene group, a naphthalene-2,6-diyl group, or a naphthalene-1,4-diyl group. M¹, M², and M³ may be each independently unsubstituted or substituted by an alkyl group having 1 to 2 carbon atoms or a halogen. 1 and n each independently represent an integer of 0, 1, 2, or 3, 1 + n represents 3 or more, when 1 represents 0, Z represents any one of the groups of the formula (R-1) to the formula (R-15), and when n represents 0, R¹ represents any one of the groups of the formula (R-1) to the formula (R-15), but 1 and n are preferably not 0.

Examples of the compound represented by the general formula (XOa) include the following:
Preferred examples of the tri- or higher-functional (meth)acrylate compounds include compounds represented by formulae (X2a-101) to (X2a-150) below.

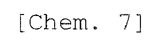

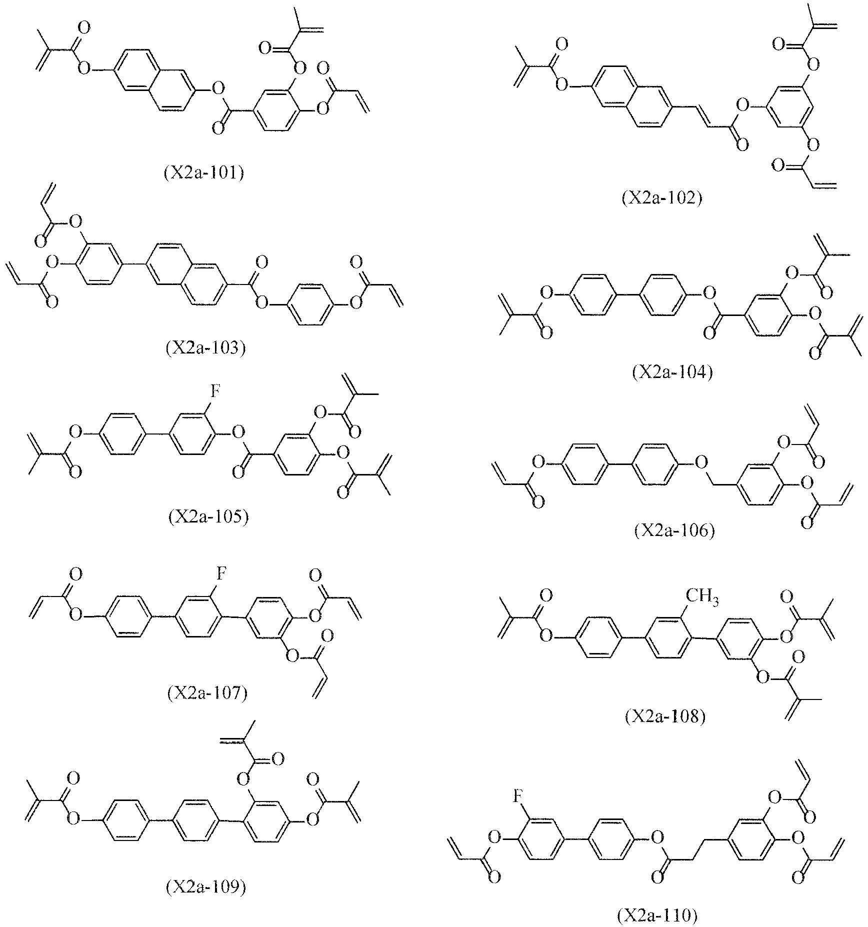

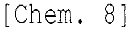

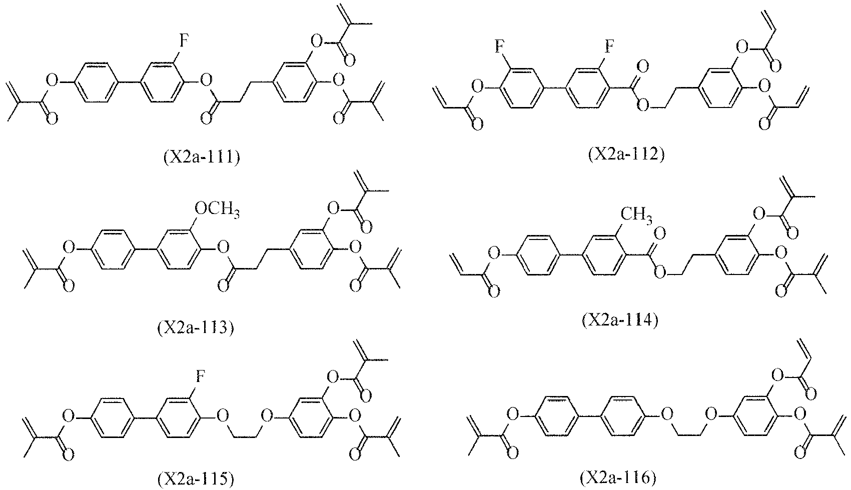

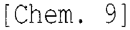

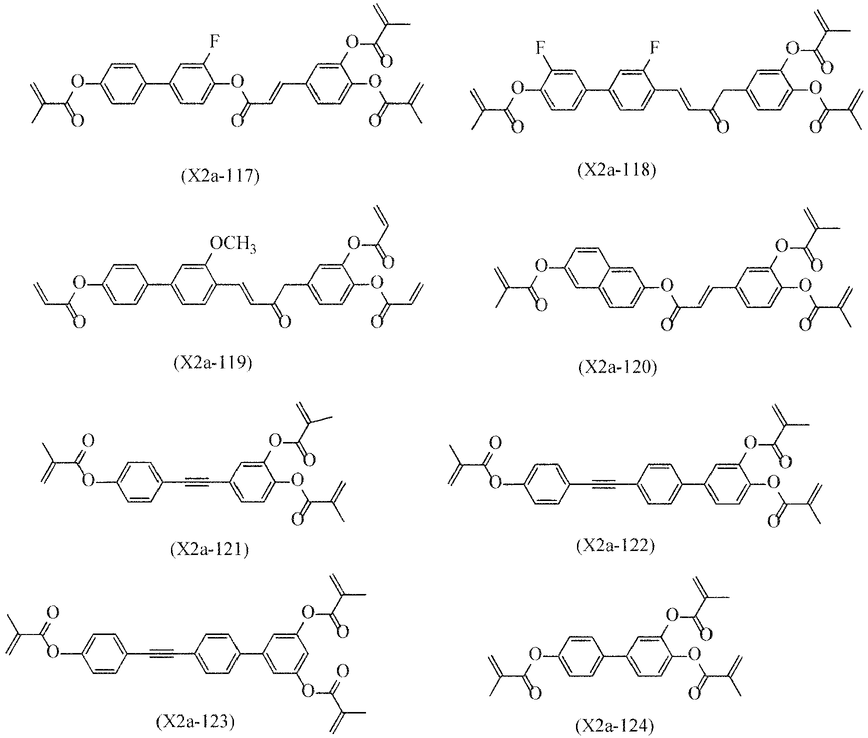

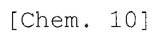

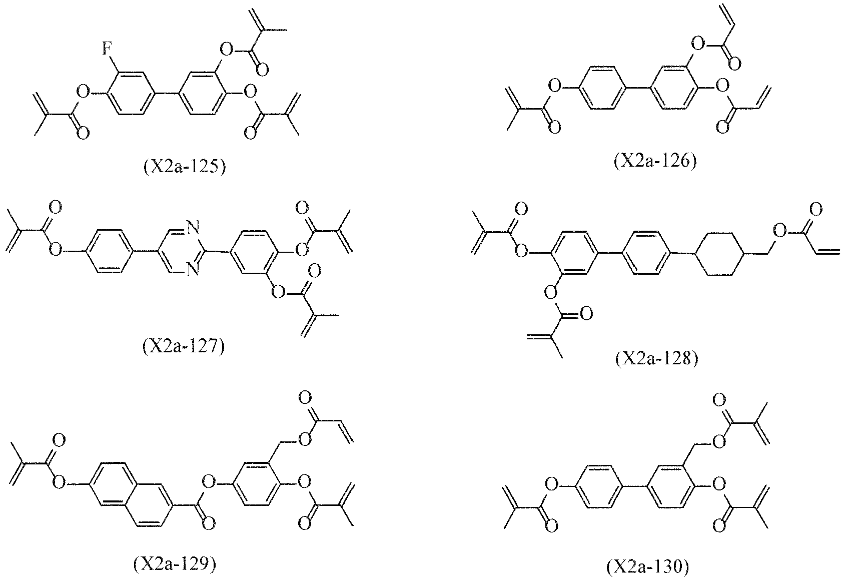

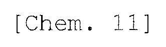

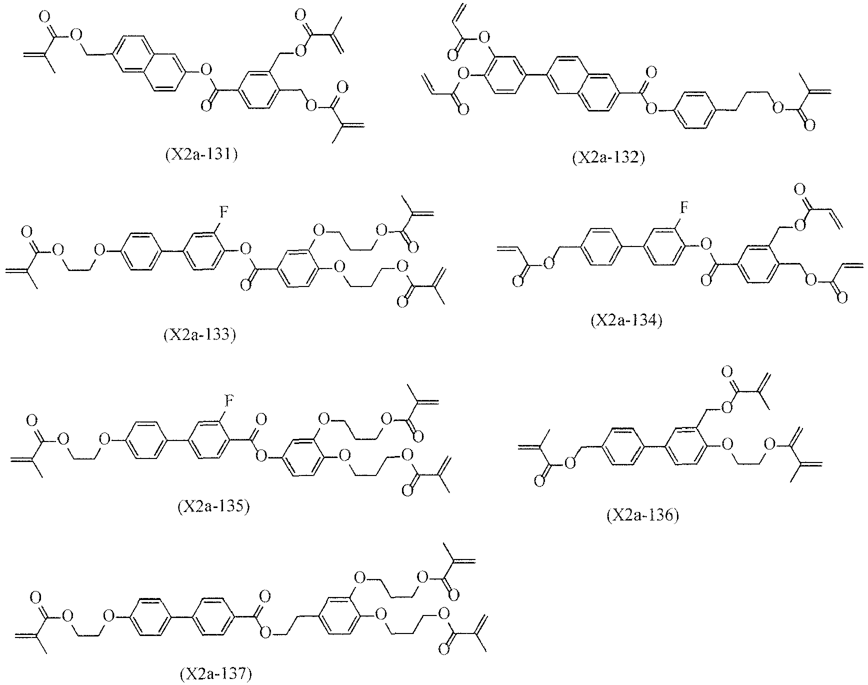

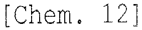

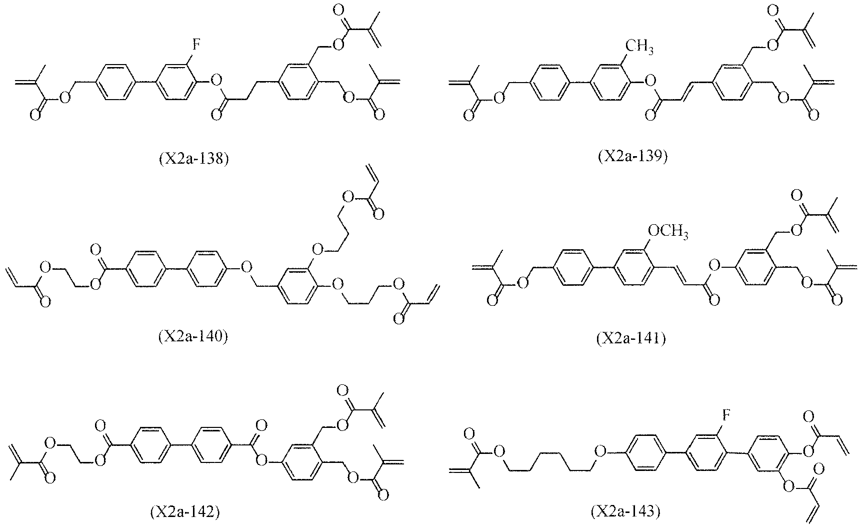

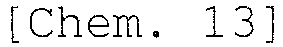

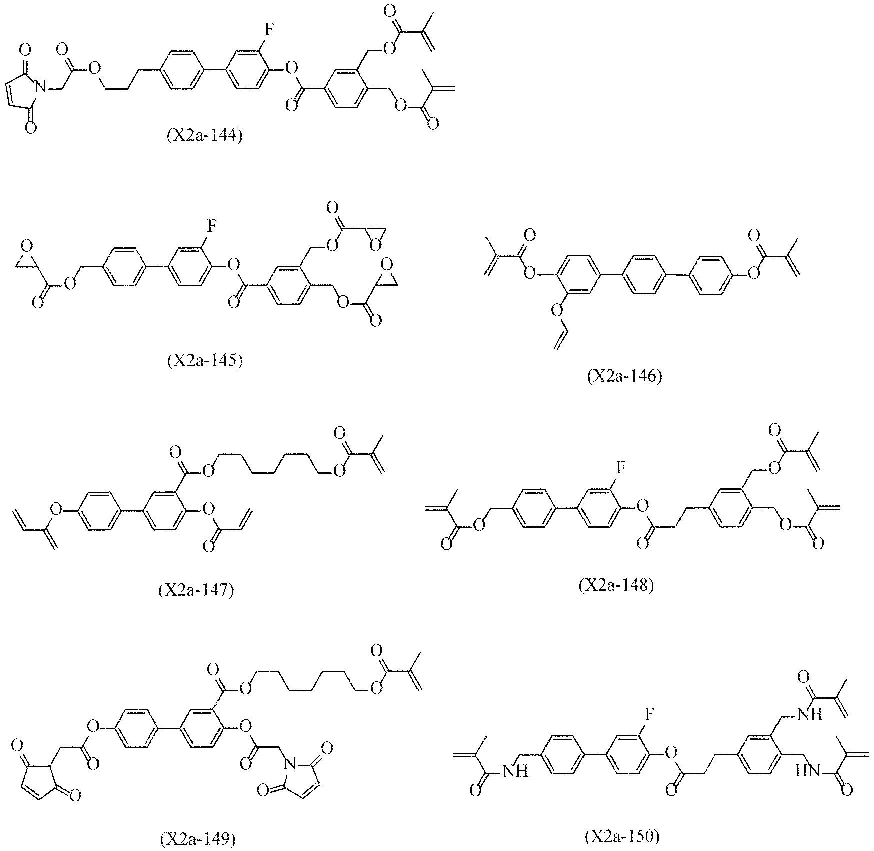

The di- or mono-functional (meth)acrylate compounds used as the second polymerizable compound are used in combination with the tri- or higher-functional (meth)acrylate compounds.

The di- or mono-functional (meth)acrylate compounds each represent a polymerizable compound having two (meth)acryloyloxy groups or one (meth)acryloyloxy group, and is preferably, for example, a compound selected from the group consisting of a compound represented by general formula (X1a) 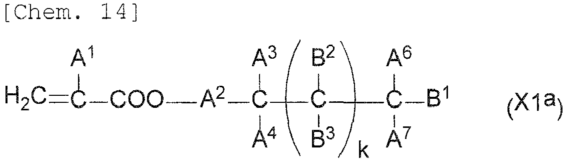
(in the formula, A¹ represents a hydrogen atom or a methyl group,
A² represents a single bond or an alkylene group having 1 to 15 carbon atoms (wherein one or two or more methylene groups in the alkylene group may be each independently substituted by an oxygen atom, -CO-, -COO-, or -OCO- so that oxygen atoms are not directly bonded to each other, and one or two or more hydrogen atoms in the alkylene group may be each independently substituted by a fluorine atom, a methyl group, or an ethyl group),
A³ and A⁶ each independently represent a hydrogen atom, a halogen atom, or an alkyl group having 1 to 18 carbon atoms (wherein one or two or more methylene groups in the alkyl group may be each independently substituted by an oxygen atom, -CO-, -COO-, or -OCO- so that oxygen atoms are not directly bonded to each other, and one or two or more hydrogen atoms in the alkyl group may be each independently substituted by a halogen atom or an alkyl group having 1 to 17 carbon atoms),
A⁴ and A⁷ each independently represent a hydrogen atom, a halogen atom, or an alkyl group having 1 to 10 carbon atoms (wherein one or two or more methylene groups in the alkyl group may be each independently substituted by an oxygen atom, -CO-, -COO-, or -OCO- so that oxygen atoms are not directly bonded to each other, and one or two or more hydrogen atoms in the alkyl group may be each independently substituted by a halogen atom or an alkyl group having 1 to 9 carbon atoms),
K represents 1 to 40,
B¹, B², and B³ each independently represent a hydrogen atom, a linear or branched alkyl group having 1 to 10 carbon atoms (wherein one or two or more methylene groups in the alkyl group may be each independently substituted by an oxygen atom, -CO-, -COO-, or -OCO- so that oxygen atoms are not directly bonded to each other, and one or two or more hydrogen atoms in the alkyl group may be each independently substituted by a halogen atom or an trialkoxysilyl group having 3 to 6 carbon atoms) or general formula (I-b) below,

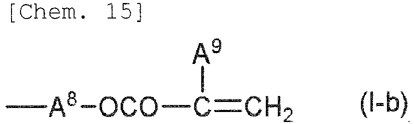

(in the formula, A⁹ represents a hydrogen atom or a methyl group,
A⁸ represents a single bond or an alkylene group having 1 to 15 carbon atoms (wherein one or two or more methylene groups in the alkylene group may be each independently substituted by an oxygen atom, -CO-, -COO-, or -OCO- so that oxygen atoms are not directly bonded to each other, and one or two or more hydrogen atoms in the alkylene group may be each independently substituted by a fluorine atom, a methyl group, or an ethyl group), and among B¹, B², and B³ present in a total of 2k + 1, the number of groups represented by the general formula (I-b) is 0 or 1), and a compound represented by general formula (X1b)

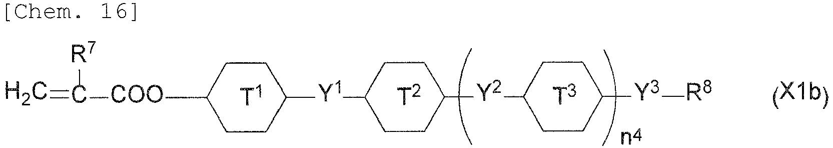

(in the formula, R7 represents a hydrogen atom or a methyl group,
six-member rings T¹, T², and T³ each independently represents any one of the following:

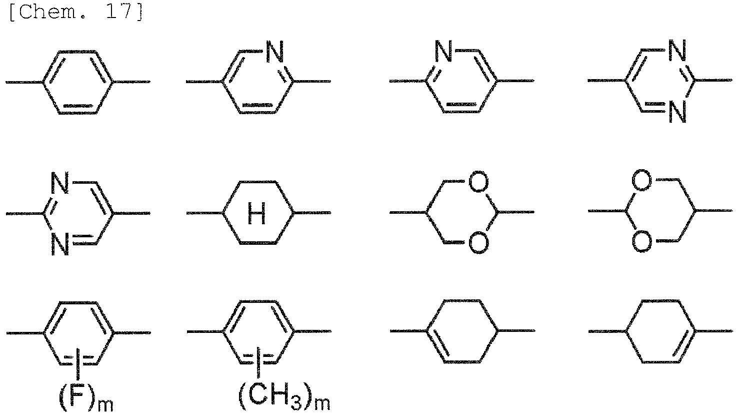

(wherein m represents an integer of 1 to 4),
n⁴ represents 0 or 1,
Y¹ and Y² each independently represent a single bond, - CH₂CH₂-, -CH₂O-, -OCH₂-, -COO-, -OCO-, -C≡C-, -CH=CH-, - CF=CF-, -(CH₂)₄-, -CH₂CH₂CH₂O-, -OCH₂CH₂CH₂-, -CH₂=CHCH₂CH₂-, or -CH₂CH₂CH=CH-,
Y³ represents a single bond, -COO-, or -OCO-, and
R³ represents a hydrocarbon group having 1 to 18 carbon atoms), and a compound represented by general formula (X1c), 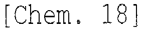 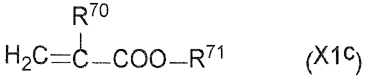
(in the formula, R⁷⁰ represents a hydrogen atom or a methyl group, and R⁷¹ represents a hydrocarbon group having a condensed ring).

In the specification, the "alkylene group" represents a divalent group formed by removing a hydrogen atom from each of the terminal carbon atoms of an aliphatic straight chain or branched chain hydrocarbon unless otherwise specified, in which the substitution of a hydrogen atom by a halogen atom or an alkyl group or the substitution of a methylene group by an oxygen atom, -CO-, -COO-, or -OCO- is particularly specified. In addition, for example, in the case of a linear alkylene group, the term "alkylene chain length" represents n in its general formula "-(CH₂)ₙ- (wherein n represents an integer of 1 or more)".

In the general formula (X1a), an alkyl group having 1 to 18 carbon atoms represented by each of A³ and A⁶ may be linear, branched, or cyclic, but is preferably linear or branched. Examples thereof include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a tert-pentyl group, a 1-methylbutyl group, a n-hexyl group, a 2-methylpentyl group, 3-methylpentyl group, a 2,2-dimethylbytyl group, a 2,3-dimethylbutyl group, a n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, a n-octyl group, an isooctyl group, a nonyl group, a decyl group, an undecyl group, a dodecyl group, a tridecyl group, a tetradecyl group, a pentadecyl group, a hexadecyl group, a heptadecyl group, an octadecyl group, and the like.

Examples of a halogen atom of each of A³ and A⁶ in the general formula (X1a) include a fluorine atom, a chlorine atom, and a bromine atom, and a fluorine atom is preferred.

When a hydrogen atom of the alkyl group as each of A³ and A⁶ is substituted by an alkyl group having 1 to 17 carbon atoms, examples of the alkyl group include the same as those of A³ and A⁶ except that the number of carbon atoms is different.

When a hydrogen atom of the alkyl group as each of A³ and A⁶ is substituted by the halogen atom, examples of the halogen atom include the same as those of A³ and A⁶.

In the general formula (X1a), an alkylene group having 1 to 15 carbon atoms as A² is, for example, a divalent group formed by removing a hydrogen atom from the alkyl group having 1 to 15 carbon atoms as each of A³ and A⁶.

Examples of the alkyl group having 1 to 10 carbon atoms as each of A⁴ and A⁷ include the same as those of A³ and A⁶ except that the number of carbon atoms is different.

When a hydrogen atom of the alkyl group as each of A⁴ and A⁷ is substituted by an alkyl group having 1 to 9 carbon atoms, examples of the alkyl group include the same as those of A³ and A⁶ except that the number of carbon atoms is different.

When a hydrogen atom of the alkyl group as each of A⁴ and A⁷ is substituted by the halogen atom, examples of the halogen atom include the same as those of A³ and A⁶.

Examples of a linear or branched alkyl group having 1 to 10 carbon atoms as each of B¹, B², and B³ in the general formula (X1a) include the same as the linear or branched alkyl groups having 1 to 10 carbon atoms as each of A³ and A⁶.

When a hydrogen atom of the alkyl group as each of B¹, B², and B³ is substituted by a trialkoxysilyl group having 3 to 6 carbon atoms, the trialkoxysilyl group is, for example, one having a total of 3 methoxy groups or ethoxy groups as alkoxy groups, which are bonded to the same silicon atom. All the three alkoxy groups bonded to the same silicon atom may be the same, or only two of the tree alkoxy groups may be the same. Specific examples thereof include a trimethoxysilyl group, a triethoxysilyl group, an ethoxydimethoxysilyl group, a diethoxymethoxysilyl group, and the like.

When a hydrogen atom of the alkyl group as each of B¹, B², and B³ is substituted by the halogen atom, examples of the halogen atom include the same as those of A³ and A⁶.

In the general formula (X1a), a total number of B¹, B², and B³ present is 2k + 1, the number of groups represented by the general formula (I-b) is 0 or 1, and the group represented by the general formula (I-b) may be any one of B¹, B², and B³ but is preferably B¹.

The compound represented by the general formula (X1a) in which B¹, B², or B³ is a group represented by the general formula (I-b) is, for example, a compound selected from the group consisting of a compound represented by general formula (X1a-1) below, 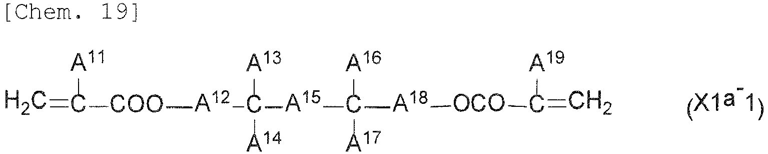
(in the formula, A¹¹ and A¹⁹ each independently represent a hydrogen atom or a methyl group, A¹² and A¹⁸ each independently represent a single bond or an alkylene group having 1 to 15 carbon atoms (wherein one or two or more methylene groups in the alkylene group may be each independently substituted by an oxygen atom, -CO-, -COO-, or -OCO- so that oxygen atoms are not directly bonded to each other, and one or two or more hydrogen atoms in the alkylene group may be each independently substituted by a fluorine atom, a methyl group, or an ethyl group),
A¹³ and A¹⁶ each independently represent a linear alkyl group having 2 to 20 carbon atoms (wherein one or two or more methylene groups in the linear alkyl group may be each independently substituted by an oxygen atom, -CO-, -COO-, or -OCO- so that oxygen atoms are not directly bonded to each other),
A¹⁴ and A¹⁷ each independently represent a hydrogen atom or an alkyl group having 1 to 10 carbon atoms (wherein one or two or more methylene groups in the alkyl group may be each independently substituted by an oxygen atom, -CO-, -COO-, or -OCO- so that oxygen atoms are not directly bonded to each other, and one or two or more hydrogen atoms in the alkyl group may be each independently substituted by a halogen atom or an alkyl group having 1 to 9 carbon atoms),
A¹⁵ represents an alkylene group having 9 to 16 carbon atoms (wherein in at least one to five methylene groups in the alkylene group, a hydrogen atom in the methylene group may be each independently substituted a linear or branched alkyl group having 1 to 10 carbon atoms, and one or two or more methylene groups in the alkylene group may be each independently substituted by an oxygen atom, -CO-, -COO-, or -OCO- so that oxygen atoms are not directly bonded to each other)), a compound represented by general formula (X1a-2) below, 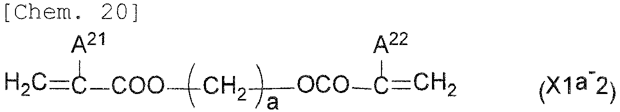
(in the formula, A²¹ and A²² each independently represent a hydrogen atom or a methyl group, and a represents an integer of 6 to 22), a compound represented by general formula (X1a-3) below, 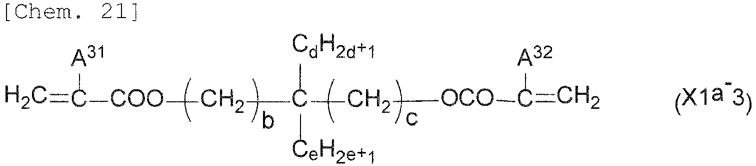 (in the formula, A³¹ and A³² each independently represent a hydrogen atom or a methyl group, b, c, and d each independently represent an integer of 1 to 10, and e represents an integer of 0 to 6), and a compound represented by general formula (X1a-4) below, 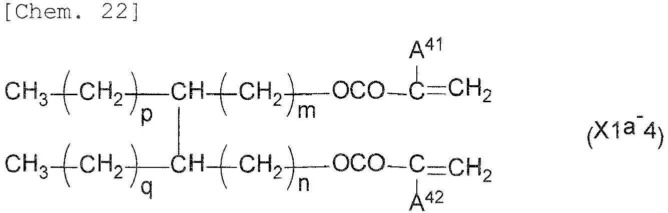 (in the formula, A⁴¹ and A⁴² each independently represent a hydrogen atom or a methyl group, and m, n, p, and q each independently represent an integer of 1 to 10).

Examples of a linear alkyl group having 2 to 20 carbon atoms as each of A¹³ and A¹⁶ in the general formula (X1a-1) include the same as those of the linear alkyl group as each of A³ and A⁶, a nanodecyl group, an icosyl group, and the like.

Examples of an alkyl group having 1 to 10 carbon atoms and represented by each of A¹⁴ and A¹⁷ in the general formula (X1a-1) include the same as those of the alkyl group as each of A³ and A⁶ except that the number of carbon atoms is different.

Examples of an alkylene group having 1 to 15 carbon atoms as each of A¹² and A¹⁸ in the general formula (X1a-1) include the same as those of the alkylene group of A².

In the general formula (X1a-1), an alkylene group having 9 to 16 carbon atoms as A¹⁵ is, for example, a divalent group formed by removing a hydrogen atom from the alkyl group having 9 to 16 carbon atoms as each of A³ and A⁶.

When a hydrogen atom of the alkyl group as each of A¹⁴ and A¹⁷ is substituted by an alkyl group having 1 to 9 carbon atoms and a hydrogen atom of the alkylene group of A¹⁵ is substituted by a linear or branched alkyl group having 1 to 10 carbon atoms, examples of the alkyl group include the same as those of A³ and A⁶ except that the number of carbon atoms is different.

When a hydrogen atom of the alkyl group as each of A¹⁴ and A¹⁷ is substituted by a halogen atom, examples of the halogen atom include the same as those of A³ and A⁶.

The compound represented by the general formula (X1a-1) preferably has hydrogen atoms as both A¹¹ and A¹⁹ in view of the higher polymerization rate than in the case where both A¹¹ and A¹⁹ are methyl groups.

In the compound represented by the general formula (X1a-1), A¹² and A¹⁸ are each independently preferably a single bond or an alkylene group having 1 to 3 carbon atoms. The distance between two polymerizable groups can be adjusted by independently changing the number of carbon atoms as each of A¹², A¹⁸, and A¹⁵. The compound represented by the general formula (X1a-1) is characterized by the long distance between polymerizable groups (distance between crosslink points), but the excessively long distance significantly decreases the polymerization rate and adversely affects a phase separation, thereby providing an upper limit of the distance between polymerizable groups. On the other hand, the distance between two side chains of A¹³ and A¹⁶ also affect the mobility of a main chain. That is, the short distance between A¹³ and A¹⁶ causes a decrease in mobility due to the interference between the side chains A¹³ and A¹⁶. Therefore, in the compound represented by the general formula (X1a-1), the distance between polymerizable groups is determined by the sum of A¹², A¹⁸, and A¹⁵, but it is preferred to lengthen A¹⁵ rather than lengthening A¹² and A¹⁸.

On the other hand, in the side chains A¹³, A¹⁴, A¹⁶, and A¹⁷, the lengths of the side chains preferably have the following conditions.

In the general formula (X1a-1), A¹³ and A¹⁴ are bonded to carbon atoms of the same main chain, and when A¹³ and A¹⁴ have different lengths, a longer side chain is referred to as A¹³ (when A¹³ and A¹⁴ have the same length, any one of the side chains is referred to as A¹³). Similarly, when A¹⁶ and A¹⁷ have different lengths, a longer side chain is referred to as A¹⁶ (when A¹⁶ and A¹⁷ have the same length, any one of the side chains is referred to as A¹⁶).

In the present invention, A¹³ and A¹⁶ each independently represent a linear alkyl group having 2 to 20 carbon atoms (wherein one or two or more methylene groups in the linear alkyl group may be each independently substituted by an oxygen atom, -CO-, -COO-, or -OCO- so that oxygen atoms are not directly bonded to each other), but are each independently preferably a linear alkyl group having 2 to 18 carbon atoms (wherein one or two or more methylene groups in the linear alkyl group may be each independently substituted by an oxygen atom, -CO-, -COO-, or -OCO- so that oxygen atoms are not directly bonded to each other), and more preferably a linear alkyl group having 3 to 15 carbon atoms (wherein one or two or more methylene groups in the linear alkyl group may be each independently substituted by an oxygen atom, -CO-, -COO-, or -OCO- so that oxygen atoms are not directly bonded to each other).

The side chains have higher mobility than the main chain, and thus the presence of side chains contributes to an improvement of mobility of a high-molecular chain at a low temperature. However, under a condition in which spatial interference occurs between two side chains as described above, mobility is conversely decreased. In order to prevent the spatial interference between side chains, it is effective to lengthen the distance between side chains and shorten the side chain length within a necessary range.

Further, in the present invention, A¹⁴ and A¹⁷ each independently represent a hydrogen atom or an alkyl group having 1 to 10 carbon atoms (wherein one or two or more methylene groups in the alkyl group may be each independently substituted by an oxygen atom, -CO-, -COO-, or -OCO- so that oxygen atoms are not directly bonded to each other, and one or two or more hydrogen atoms in the alkyl group may be each independently substituted by a halogen atom or an alkyl group having 1 to 9 carbon atoms), but are each independently preferably a hydrogen atom or an alkyl group having 1 to 7 carbon atoms (wherein one or two or more methylene groups present in the alkyl group may be each independently substituted by an oxygen atom, -CO-, -COO-, or -OCO- so that oxygen atoms are not directly bonded to each other), more preferably a hydrogen atom or an alkyl group having 1 to 5 carbon atoms (wherein one or two or more methylene groups present in the alkyl group may be each independently substituted by an oxygen atom, -CO-, -COO-, or -OCO- so that oxygen atoms are not directly bonded to each other), and still more preferably a hydrogen atom or an alkyl group having 1 to 3 carbon atoms (wherein one or two or more methylene groups present in the alkyl group may be each independently substituted by an oxygen atom, -CO-, - COO-, or -OCO- so that oxygen atoms are not directly bonded to each other).

Also, the excessively log distance between the side chains A¹⁴ and A¹⁷ is undesired because it induces the spatial interference between the side chains. On the other hand, when A¹⁴ and A¹⁷ are short alkyl chains, it is considered that they can become side chains having high mobility and have the function of inhibiting the approach between adjacent main chains. It is thus considered that the mobility of a main chain is enhanced by the unction of preventing interference between high-molecular main chains. Therefore, an increase in anchoring energy at a low temperature can be suppressed, thereby causing effectiveness for improving the display characteristics of a polymer stabilized liquid crystal display device within a low-temperature region.

In addition, longer A¹⁵ is preferably located between two side chains in view of changing the distance between side chains and in view of decreasing the glass transition point by widening the distance between crosslink points. However, in the case of excessively long A¹⁵, the molecular weight of the compound represented by the general formula (X1a-1) is excessively increased, thereby decreasing the compatibility with the liquid crystal composition and adversely affecting the phase separation due to the excessively low polymerization rate. For these reasons and the like, there is naturally an upper limit of the length of A¹⁵.

Thus, A¹⁵ is preferably an alkylene group having 9 to 16 carbon atoms (wherein in at least one to five methylene groups in the alkylene group, a hydrogen atom in the methylene group may be each independently substituted by a linear or branched alkyl group having 1 to 10 carbon atoms, and one or two or more methylene groups in the alkylene group may be each independently substituted by an oxygen atom, -CO-, -COO-, or -OCO- so that oxygen atoms are not directly bonded to each other).

That is, the alkylene chain length of A¹⁵ preferably has 9 to 16 carbon atoms. When a hydrogen atom in an alkylene group of A¹⁵ is substituted by an alkyl group having 1 to 10 carbon atoms, the number of alkyl groups as substituents is preferably 1 to 5, more preferably 1 to 3, and still more preferably 2 or 3. The number of carbon atoms of an alkyl group as a substituent is preferably 1 to 5 and more preferably 1 to 3.

The compound represented by the general formula (X1a-1) can be produced by a known method described in "Tetrahedron Letters, Vol. 30, pp. 4985", "Tetrahedron Letters, Vol. 23, No. 6, pp. 681-684", and "Journal of Polymer Science: Part A: Polymer Chemistry, Vol. 34, pp. 217-225".

For example, the compound represented by the general formula (X1a-1) in which A¹⁴ and A¹⁷ are each hydrogen is produced by reacting a compound having a plurality of epoxy groups with a polymerizable compound having active hydrogen reactive with an epoxy group, such as acrylic acid, methacrylic acid, or the like, to synthesize a polymerizable compound having a hydroxyl group, and then reacting with a saturated fatty acid.

Further, the compound is produced by reacting a compound having a plurality of epoxy groups with a saturated fatty acid to synthesize a compound having a hydroxyl group and then reacting with a polymerizable compound having a group reactive with a hydroxyl group such as an acrylic acid chloride or the like.

Also, for example, in the case of a radical polymerizable compound of the general formula (X1a-1) in which A¹⁴ and A¹⁷ are each an alkyl group, and A¹² and A¹⁸ are each a methylene group having 1 carbon atom, the polymerizable compound can be produced by a method of reacting a compound having a plurality of oxetane groups with a fatty acid chloride or fatty acid reactive with an oxetane group and further reacting with a polymerizable compound having active hydrogen, such as acrylic acid or the like; a method of reacting a compound having an oxetane group with a fatty acid chloride or fatty acid reactive with an oxetane group and further reacting with a polymerizable compound having active hydrogen, such as acrylic acid or the like; or the like.

Also, in the case of the general formula (X1a-1) in which A¹² and A¹⁸ are each an alkylene group having 3 carbon atoms (propylene group, -CH₂CH₂CH₂-), the compound can be produced by using a compound having a plurality of furan groups in place of oxetane groups. Further, in the case of the general formula (X1a-1) in which A¹² and A¹⁸ are each an alkylene group having 4 carbon atoms (butylene group, - CH₂CH₂CH₂CH₂-), the compound can be produced by using a compound having a plurality of pyrane groups in place of oxetane groups.

Among the compounds of the general formula (Xla-1) produced as described above, particularly preferred is a compound represented by general formula (X1a-1-1) below, 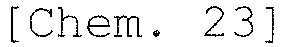 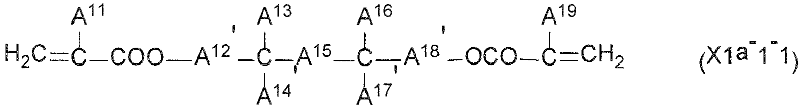
(in the formula, A¹¹ and A¹⁹ each independently represent a hydrogen atom or a methyl group;
A^{12'} and A^{18'} each independently represent a methylene group; A¹³ and A¹⁶ each independently represent a linear alkyl group having 2 to 20 carbon atoms (wherein one or two or more methylene groups in the linear alkyl group may be each independently substituted by an oxygen atom, -CO-, -COO-, or -OCO- so that oxygen atoms are not directly bonded to each other);
A^{14'} and A^{17'} each independently represent an alkyl group having 1 to 10 carbon atoms; and
A¹⁵ represents an alkylene group having 9 to 16 carbon atoms (wherein in at least one to five methylene groups in the alkylene group, a hydrogen atom in the methylene group may be each independently substituted a linear or branched alkyl group having 1 to 10 carbon atoms, and one or two or more methylene groups in the alkylene group may be each independently substituted by an oxygen atom, -CO-, -COO-, or -OCO- so that oxygen atoms are not directly bonded to each other)).

Examples of the alkyl group as each of A^{14'} and A^{17'} include the same as those of A¹⁴ and A¹⁷.

The compound represented by the general formula (X1a-1-1) particularly preferably has a total number of 2 or more of -COO- and -OCO- in A¹⁵ and also 1 or less of each of -COO- and -OCO- in A¹³ and A¹⁶, and specific examples thereof include compounds represented by formulae (X1a-101) to (X1a-109) below.

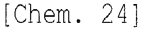

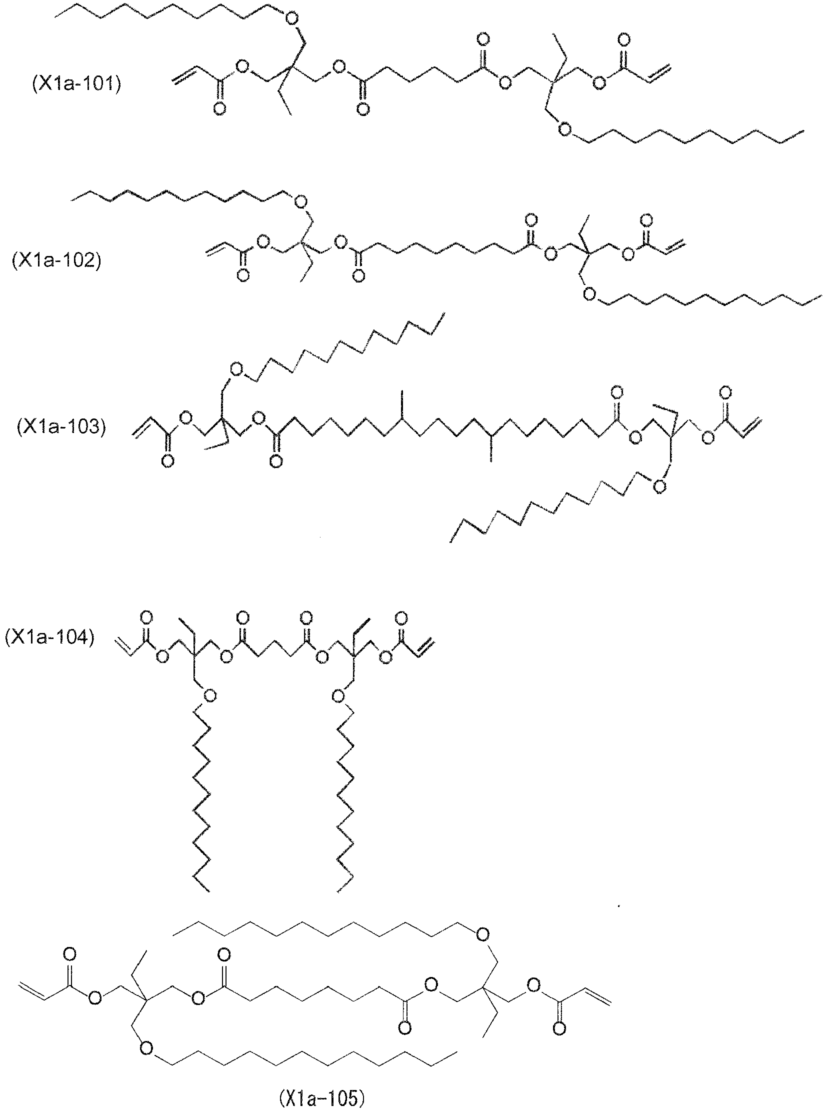

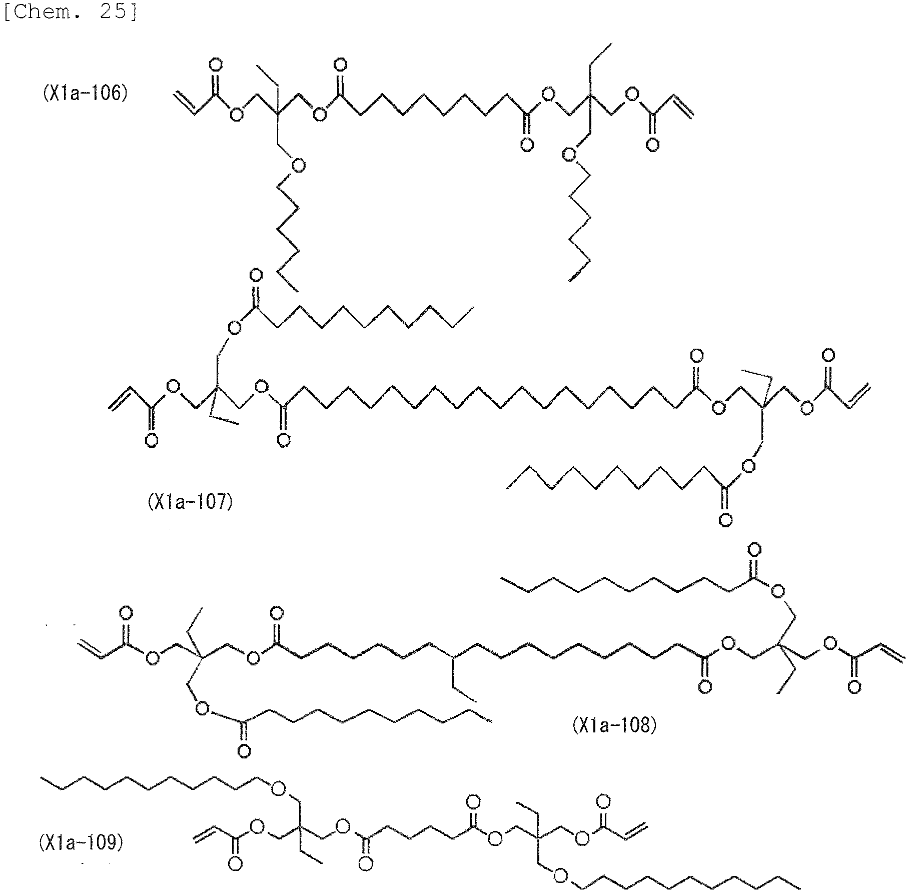

The hydrocarbon group R⁸ having 1 to 18 carbon atoms in the general formula (X1b) may be an aliphatic hydrocarbon group or an aromatic hydrocarbon group, and the aliphatic hydrocarbon group may be linear, branched, or cyclic and may be any one of a saturated aliphatic hydrocarbon group and an unsaturated aliphatic hydrocarbon group. The cyclic hydrocarbon group may be monocyclic or polycyclic.

In particular, the hydrocarbon group R⁸ having 1 to 18 carbon atoms is preferably an aliphatic hydrocarbon group, more preferably a saturated aliphatic hydrocarbon group, such as the same as the alkyl group having 1 to 18 carbon atoms as each of A³ and A⁶, and particularly preferably a linear or branched saturated aliphatic hydrocarbon group.

The compound represented by the general formula (X1b) is preferably, for example, a compound in which all the six-member rings T¹, T², and T³ are hydrocarbon rings.

In the compound represented by the general formula (X1c), a hydrocarbon group R⁷¹ may be a group having a condensed ring, and the group may have only a condensed ring or a condensed ring and another hydrocarbon group.

The condensed ring may be an aliphatic ring or an aromatic ring. The aliphatic ring may be any one of a saturated aliphatic ring and an unsaturated aliphatic ring or combination of a saturated aliphatic ring and an unsaturated aliphatic ring. The number of rings constituting the condensed ring may be 2 or more but is preferably 2 to 7.

The hydrocarbon group other than the condensed ring may be linear, branched, or cyclic, and may have both a linear (straight chain and/or branched chain) structure and a cyclic structure. The hydrocarbon group having both the linear structure and the cyclic structure may be any one of a saturated hydrocarbon group and an unsaturated hydrocarbon group, and the hydrocarbon group having the cyclic structure may be any one of an aliphatic-ring hydrocarbon group and an aromatic hydrocarbon group.

An example of R⁷¹ is a monovalent group formed by removing a hydrogen atom from steroid and is preferably a monovalent group formed by removing a hydroxyl group from cholesterol.

The polymerizable compounds used for forming the alignment control layer may include one or more tri- or higher-functional (meth)acrylates as the first polymerizable compound and one or more di- or mono-functional (meth)acrylates as the second polymerizable compound. However, a total number of the compounds is preferably 2 to 5 in view of the effect of preventing the occurrence of dropping marks during the manufacture of a liquid crystal display device without degrading the characteristics of a liquid crystal display device and the image-sticking characteristic of a liquid crystal display device.

The ratio of each of the one or more tri- or higher-functional (meth)acrylate compounds and di- or mono-functional (meth)acrylate compounds used for forming the alignment control layer may be properly adjusted according to the number of the polymerizable compounds used. However, the ratio of the tri- or higher-functional (meth)acrylate compounds is preferably 0 to 5% by mass and more preferably 1.0% to 4.0% by mass relative to the liquid crystal composition. The ratio of the di- or mono-functional (meth)acrylate compounds is preferably 0 to 5% by mass and more preferably 1.0% to 4.0% by mass relative to the liquid crystal composition.

The liquid crystal composition used in the present invention contains a compound represented by general formula (I) below, 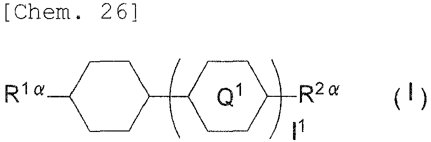 (in the formula, R^{1α} and R^{2α} each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; Q¹ represents a 1,4-phenylene group or a trans-1,4-cyclohexylene group, I¹ represents 1 or 2, and when I¹ is 2, two Q¹ may be the same or different) and a compound represented by general formula (II) below, 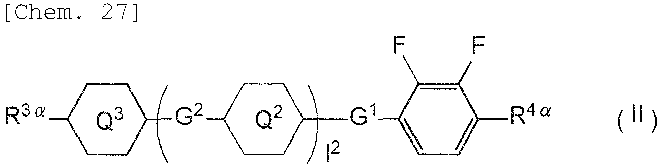 (in the formula, R^{3α} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; R^{4α} represents an alkyl group having 1 to 8 carbon atoms, an alkenyl group having 4 to 8 carbon atoms, an alkoxy group having 1 to 8 carbon atoms, or an alkenyloxy group having 3 to 8 carbon atoms; Q² and Q³ each independently represent a 1,4-phenylene group or a trans-1,4-cyclohexylene group; G¹ and G² each independently represent a single bond, -CH₂CH₂-, -CH₂O-, -OCH₂-, -CF₂O-, or -OCF₂-; and I² represents 0, 1, or 2, and when I² is 2, two each of Q² and G² may be the same or different).

In the general formula (I), an alkyl group having 1 to 8 carbon atoms as each of R^{1α} and R^{2α} may be linear, branched, or cyclic, but is preferably linear or branched. Examples thereof include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a tert-pentyl group, a 1-methylbutyl group, a n-hexyl group, a 2-methylpentyl group, a 3-methylpentyl group, a 2,2-dimethylbutyl group, a 2,3-dimethylbutyl group, a n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, a n-octyl group, an isooctyl group, and the like.

The alkyl group as each of R^{1α} and P^{2α} preferably has 1 to 6 carbon atoms.

In the general formula (I), an alkenyl group having 2 to 8 carbon atoms as each of R^{1α} and R^{2α} is, for example, a monovalent group, such as an ethenyl group (vinyl group), a 2-propenyl group (allyl group), or the like, in which a single bond (C-C) between carbon atoms in the alkyl group having 2 to 8 carbon atoms as each of R^{1α} and R^{2α} is substituted by a double bond (C=C).

The alkenyl group as each of R^{1α} and R^{2α} preferably has 2 to 6 carbon atoms, and the following structures are more preferred.

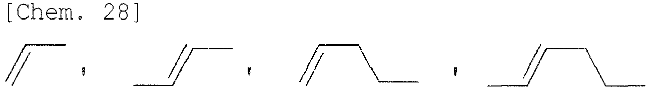

(In the formulae, a carbon atom at the right end of the alkenyl group is bonded to a cyclic structure.)

In the general formula (I), an alkoxy group having 1 to 8 carbon atoms as each of R^{1α} and R^{2α} is, for example, a monovalent group, such as methoxy group, ethoxy group, or the like, in which the alkyl group having 1 to 8 carbon atoms as each of R^{1α} and R^{2α} is bonded to an oxygen atom.

The alkoxy group as each of R^{1α} and R^{2α} preferably has 1 to 6 carbon atoms, more preferably 1 to 5, and particularly preferably 1 to 3.

In the general formula (I), an alkenyloxy group having 2 to 8 carbon atoms as each of R^{1α} and R^{2α} is, for example, a monovalent group, such as ethenyloxy group, 2-propenyloxy group, or the like, in which the alkenyl group having 2 to 8 carbon atoms as each of R^{1α} and R^{2α} is bonded to an oxygen atom.

The alkenyloxy group as each of R^{1α} and R^{2α} preferably has 2 to 6 carbon atoms.

Preferred examples of a combination of R^{1α} and R^{2α} in the compound represented by the general formula (I) include a combination of the alkyl groups, a combination of the alkyl group and the alkoxy group, and a combination of the alkyl group and the alkenyl group.

Preferred examples of the compound represented by the general formula (I) include compounds represented by the following general formulae (I-1) to (1-4).

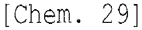

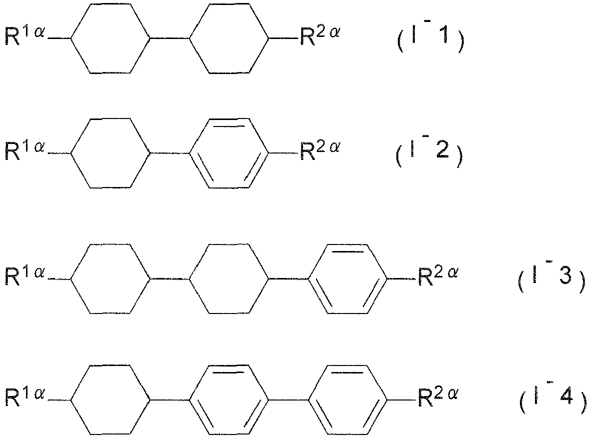

(In the formulae, R^{1α} and R^{2α} are each the same as described above.)

The content of the compound represented by the general formula (I) in the liquid crystal composition is 30% to 65% by mass and more preferably 35% to 55% by mass.

In the general formula (II), R^{3α} represents the same as R^{1α} and R^{2α}.

In the general formula (II), examples of an alkyl group and alkoxy group each having 1 to 8 carbon atoms as R^{4α} include the same as those of the alkyl group and alkoxy group each having 1 to 8 carbon atoms as each of R^{1α} and R^{2α}.

In the general formula (II), examples of an alkenyl group having 4 to 8 carbon atoms and an alkenyloxy group having 3 to 8 carbon atoms as R^{4α} include the same as those of the alkenyl group and alkenyloxy group as each of R^{1α} and R^{2α} except that the number of carbon atoms is different.

The alkyl groups as R^{3α} and R^{4α} each independently preferably have 1 to 6 carbon atoms and more preferably 1 to 5 carbon atoms.

The alkoxy groups as R^{3α} and R^{4α} each independently preferably have 1 to 6 carbon atoms and more preferably 1 to 5 carbon atoms.

A preferred example of the compound represented by the general formula (II) is a compound in which R^{3α} is the alkyl group, R^{4α} is the alkoxy group, I² is 0 or 1, G¹ is a single bond, -CH₂CH₂-, or -CH₂O-, and G² is a single bond or - CH₂CH₂-.

In addition, preferred examples of the compound represented by the general formula (II) include compounds represented by the following general formulae (II-1) to (II-8) .

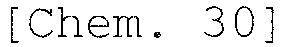

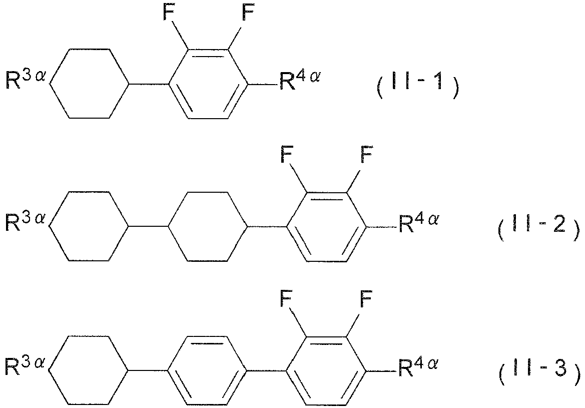

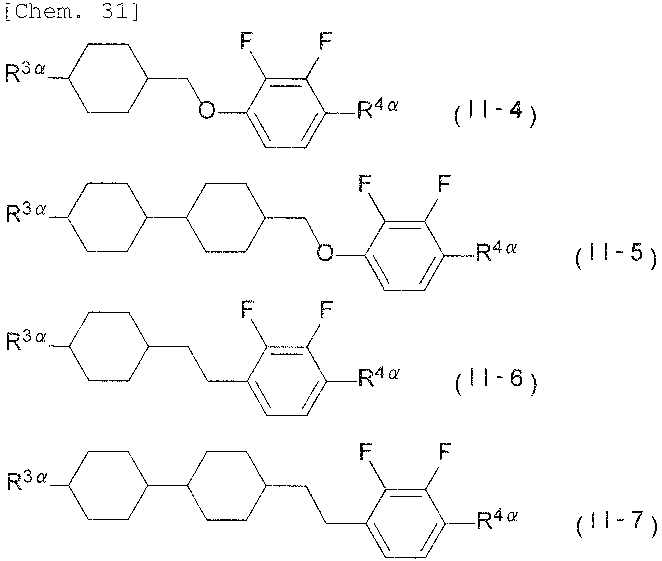

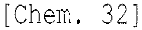

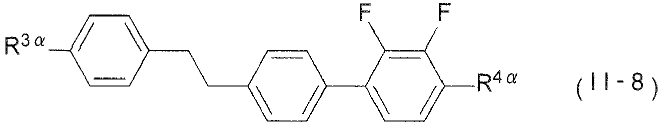

(In the formulae, R^{3α} and R^{4α} are each the same as described above.)

The content of the compound represented by the general formula (II) in the liquid crystal composition is 30% to 65% by mass and more preferably 35% to 55% by mass.

In the liquid crystal composition, the ratio of [content of compound represented by general formula (II)]/[content of compound represented by general formula (I)] (mass ratio) is preferably 8/2 to 2/8, more preferably 7/3 to 3/7, and particularly preferably 6/4 to 4/6.

Other than the compounds represented by the general formulae (I) and (II), the liquid crystal composition may contain a compound not corresponding to these and represented by general formula (III) below,

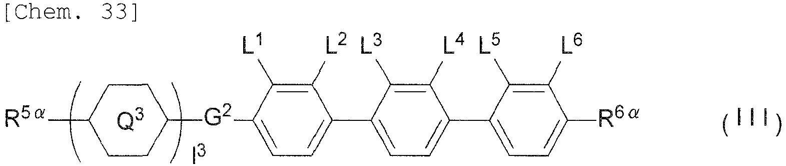

(In the formula, R^{5α} and R^{6α} each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms (wherein one or two or more methylene groups in the alkyl group, the alkenyl group, the alkoxy group, or the alkenyloxy group may be each independently substituted by an oxygen atom or -CO- so that oxygen atoms are not directly bonded to each other, and one or two or more hydrogen atoms in the alkylene group may be each independently substituted by a fluorine atom); Q³ represents a 1,4-phenylene group or a tetrahydropyran-2,5-diyl group; I³ represents 0 or 1; G² represents a single bond, -CH₂O-, -OCH₂-, -CF₂O-, or -OCF₂-; and L¹ to L⁶ each independently represent a hydrogen atom or a fluorine atom, at least two of L¹ to L⁶ each independently represent a fluorine atom, and when I³ represents 0 and G² represents a single bond, not both L⁵ and L⁶ represent a fluorine atom.)

In the general formula (III), examples of an alkyl group having 1 to 8 carbon atoms, an alkenyl group having 2 to 8 carbon atoms, an alkoxy group having 1 to 8 carbon atoms, and alkenyloxy group having 2 to 8 carbon atoms as each of R^{5α} and R^{6α} include the same as those of R^{1α} and R^{2α}.

Preferred examples of the compound represented by the general formula (III) include a compound represented by general formula (III-1) below, 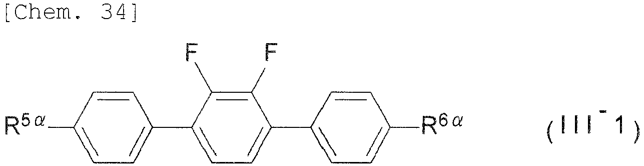 (in the formula, R^{5α} and R^{6α} are each the same as described above).

Other than the compounds represented by the general formulae (I) and (II), the liquid crystal composition may contain a compound not corresponding to these and represented by general formula (IV) below, 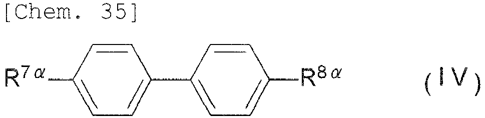 (in the formula, R^{7α} and R^{8α} each independently represent an alkyl group having 1 to 10 carbon atoms, an alkenyl group having 2 to 10 carbon atoms, or an alkoxy group having 1 to 10 carbon atoms).

In the general formula (IV), an alkyl group having 1 to 10 carbon atoms as each of R^{7α} and R^{8α} may be linear, branched, or cyclic, but is preferably linear or branched. Examples thereof include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a tert-pentyl group, a 1-methylbutyl group, a n-hexyl group, a 2-methylpentyl group, a 3-methylpentyl group, a 2,2-dimethylbutyl group, a 2,3-dimethylbutyl group, a n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, a n-octyl group, an isooctyl group, a nonyl group, a decyl group, and the like.

The alkyl group as each of R^{1α} and R^{2α} preferably has 1 to 6 carbon atoms.

In the general formula (IV), an alkenyl group having 2 to 10 carbon atoms as each of R^{7α} and R^{8α} is, for example, a monovalent group, in which a single bond (C-C) between carbon atoms in the alkyl group having 2 to 10 carbon atoms as each of R^{7α} and R^{8α} is substituted by a double bond (C=C).

The alkenyl group as each of R^{7α} and R^{8α} preferably has 2 to 6 carbon atoms, and examples of the alkenyl group include those of R^{1α} and R^{2α}.

In the general formula (IV), an alkoxy group having 1 to 10 carbon atoms as each of R^{7α} and R^{8α} is, for example, a monovalent group, such as a methoxy group, an ethoxy group, or the like, in which the alkyl group having 1 to 10 carbon atoms as each of R^{7α} and R^{8α} is bonded to an oxygen atom.

The compound contained and represented by the general formula (II) may be a compound represented by general formula (V) below, 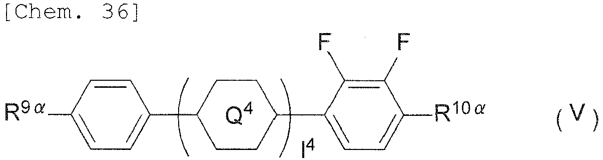 (in the formula, R^{9α} and R^{10α} each independently represent an alkyl group having 1 to 18 carbon atoms, an alkenyl group having 2 to 18 carbon atoms, an alkoxy group having 1 to 18 carbon atoms, or an alkenyloxy group having 2 to 18 carbon atoms; Q⁴ represents a 1,4-phenylene group or a trans-1,4-cyclohexylene group; and I⁴ represents 0 or 1).

In the general formula (V), an alkyl group having 1 to 18 carbon atoms as each of R^{9α} and R^{10α} may be linear, branched, or cyclic, but is preferably linear or branched. Examples thereof include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a tert-pentyl group, a 1-methylbutyl group, a n-hexyl group, a 2-methylpentyl group, a 3-methylpentyl group, aa 2,2-dimethylbutyl group, a 2,3-dimethylbutyl group, a n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, a n-octyl group, an isooctyl group, a nonyl group, a decyl group, an undecyl group, a dodecyl group, a tridecyl group, a tetradecyl group, a pentadecyl group, a hexadecyl group, a heptadecyl group, an octadecyl group, and the like.

The alkyl group as each of R^{9α} and R^{10α} preferably has 1 to 10 carbon atoms and more preferably 1 to 6.

In the general formula (V), an alkenyl group having 2 to 18 carbon atoms as each of R^{9α} and R^{10α} is, for example, a monovalent group, in which a single bond (C-C) between carbon atoms in the alkyl group having 2 to 18 carbon atoms as each of R^{9α} and R10^{8α} is substituted by a double bond (C=C) .

The alkenyl group as each of R^{9α} and R^{10α} preferably has 2 to 6 carbon atoms, and examples of the alkenyl group include the same as those of R^{1α} and R^{2α}.

In the general formula (V), an alkoxy group having 1 to 18 carbon atoms as each of R^{9α} and R^{10α} is, for example, a monovalent group, such as a methoxy group, an ethoxy group, or the like, in which the alkyl group having 1 to 18 carbon atoms as each of R^{9α} and R^{10α} is bonded to an oxygen atom.

The alkoxy group as each of R^{9α} and R^{10α} preferably has 1 to 10 carbon atoms and more preferably 1 to 6.

In the general formula (V), an alkenyloxy group having 2 to 18 carbon atoms as each of R^{9α} and R^{10α} is, for example, a monovalent group, such as an ethenyloxy group, a 2-propenyloxy group, or the like, in which the alkenyl group having 2 to 18 carbon atoms as each of R^{9α} and R^{10α} is bonded to an oxygen atom.

Preferred examples of the compound represented by the general formula (V) include a compound represented by general formula (V-1) below, 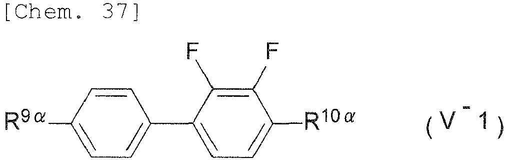 (in the formula, R^{9α} and R^{10α} are each the same as described above).

The content of each of the components, such as compounds represented by the general formulae (III), (IV), and (V), other than the compounds represented by the general formulae (I) and (II) in the liquid crystal composition is preferably 25% by mass or less and more preferably 20% by mass or less. The liquid crystal display device 10 may further include a passivation film provided at least either between the first substrate 11 and the liquid crystal layer 13 or between the second substrate 12 and the liquid crystal layer 13 (not shown in the drawing). By having the passivation film, the surface of the first substrate 11 or the second substrate 12 adjacent to the passivation film is protected.

The liquid crystal display device 10 may further include a planarization film provided at least either between the first substrate 11 and the liquid crystal layer 13 or between the second substrate 12 and the liquid crystal layer 13 (not shown in the drawing). When the surface of the film has high flatness, the passivation film may be handled as the planarization film.

A known film can be properly applied as any one of the passivation film and the planarization film.

The liquid crystal display device of the present invention uses a combination of the liquid crystal composition containing both the specified compounds represented by the general formulae (I) and (II) as liquid crystal molecules and the alignment control layer formed by using two or more polymerizable compounds. Therefore, unlike in a usual liquid crystal display device, the liquid crystal molecules are substantially vertically aligned to the substrate surface with no voltage applied even when alignment films are not disposed between the first substrate and the liquid crystal layer and between the second substrate and the liquid crystal layer. In addition, the occurrence of image sticking and dropping marks during the manufacture is suppressed without degrading the characteristics such as dielectric anisotropy, viscosity, nematic phase upper limit temperature, rotational viscosity (γ₁), etc.

### <Method for manufacturing liquid crystal display device>

The liquid crystal display device 10 shown in Fig. 1 can be manufactured by, for example, a method described below.

First, the first substrate 11 and the second substrate 12 are combined, and a liquid crystal-containing polymerization composition for forming the liquid crystal layer 13 and the alignment control layer is held between the substrates in a step described below. The liquid crystal-containing polymerization composition contains, as essential components, the compound represented by the general formula (I), the compound represented by the general formula (II), and the two or more polymerizable compounds.

Specifically, in any one of the first substrate 11 and the second substrate 12, spacer projections, for example, plastic beads or the like, for securing a cell gap are dispersed on the facing surfaces, and a seal portion is printed (formed) by, for example, a screen printing method using an epoxy adhesive or the like. The surface of the first substrate 11, which faces the second substrate 12, is the surface having the common electrode 14 and the color filter 18, and the surface of the second substrate 12, which faces the first substrate 11, is the surface having the pixel electrodes 15.

Then, the first substrate 11 and the second substrate 12 are opposed to each other and bonded together through the spacer projections and the seal portion, and the liquid crystal-containing polymerization composition is injected into the formed space. Then, the seal portion is cured by heating or the like to hold the liquid crystal-containing polymerization composition between the first substrate 11 and the second substrate 12.

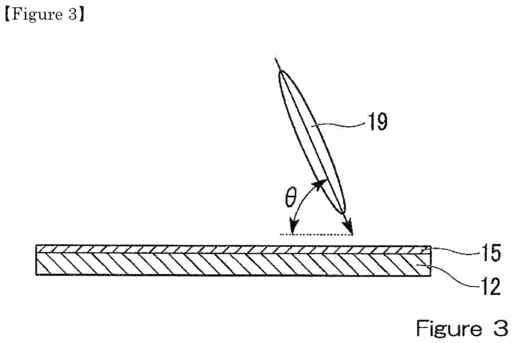

Then, a voltage is applied between the common electrode 14 and the pixel electrode 15 by using a voltage application unit. The voltage applied is, for example, 5 to 30 V. As a result, an electric field is produced in a direction at a predetermined angle with the in the first substrate 11 surface (the surface facing the liquid crystal-containing polymerization composition) adjacent to the liquid crystal-containing polymerization composition and the second substrate 12 surface (the surface facing the liquid crystal-containing polymerization composition) adjacent to the liquid crystal-containing polymerization composition. Thus, the liquid crystal molecules (the compound represented by the general formula (I) and the compound represented by the general formula (II)) 19 in the liquid crystal-containing polymerization composition are aligned in a predetermined direction inclined from the normal direction to the first substrate 11 and the second substrate 12. Therefore, as shown in Fig. 3, a pre-tilt angle θ is applied to the liquid crystal molecules 19. The size of pre-tilt angle θ can be controlled by appropriately adjusting the magnitude of voltage.

Then, the two or more polymerizable compounds are polymerized by irradiating the liquid crystal-containing polymerization composition with active energy rays such as ultraviolet light or the like, for example, from the outside of the first substrate 11 while the voltage is applied. The active energy rays may be applied from the outside of the second substrate 12 or from both the outside of the first substrate 11 and the outside of the second substrate 12.

The two or more polymerizable compounds in the liquid crystal-containing polymerization composition are reacted by irradiation with the active energy rays, and consequently the liquid crystal-containing polymerization composition is converted to a liquid crystal composition having a desired composition, thereby forming the liquid crystal layer 13. At the same time, the alignment control layers are formed between the first substrate 11 and the liquid crystal layer 13 and between the second substrate 12 and the liquid crystal layer 13.

In a non-driving state, the alignment control layer applies the pre-tilt angle θ to the liquid crystal molecules 19 in the liquid crystal layer 13 at the positons near the first substrate 11 and near the second substrate 12.

The intensity of irradiating active energy rays may be constant or may not be constant, and when the intensity of irradiation is changed, the irradiation time at each intensity can be arbitrarily determined. When a two-or-more-stage irradiation step is used, the irradiation intensity in the second or later stage in the irradiation step is preferably weaker than that in the first stage, and the total irradiation time and total irradiation energy in the second or later stage are longer and larger than those in the first stage. When the irradiation intensity is discontinuously changed, the average irradiation intensity in the first half of the total time of the irradiation step is preferably higher than that in the second half, the intensity immediately after the start of irradiation is more preferably highest, and the irradiation intensity is further preferably continuously decreased to a certain value with the passage of irradiation time. In this case, the intensity of active energy rays is preferably 2 to 100 mW/cm². The irradiation intensity in the first stage of multi-stage irradiation or the maximum irradiation intensity in the entire irradiation step when the irradiation intensity is discontinuously changed is more preferably 10 to 100 mW/cm². The irradiation intensity in the second or latter stage of multi-stage irradiation or the minimum irradiation intensity when the irradiation intensity is discontinuously changed is more preferably 2 to 50 mW/cm². The total amount of irradiation energy is preferably 10 J to 300 J, more preferably 50 J to 250 J, and further preferably 100 J to 250 J.

The applied voltage may be an alternating-current voltage or a direct-current voltage.

The irradiating active energy rays preferably have a plurality of spectra, and ultraviolet light having a plurality of spectra is preferred. When the two or more polymerizable compounds are irradiated with active energy rays having a plurality of spectra, each of the polymerizable compounds can be polymerized with the active energy rays with a spectrum (wavelength) suitable to the compound. In this case, the alignment control layer can be more efficiently formed.

The alignment control layer is composed of the polymer of the polymerizable compounds, but, for example, it is supposed that the alignment control layer is not only formed between the first substrate 11 and the liquid crystal layer 13 so as to clearly divide therebetween but also may be formed between the first substrate 11 and the liquid crystal layer 13 so as to enter the liquid crystal layer 13 from the first substrate 11 surface (surface facing the liquid crystal layer 13) adjacent to the liquid crystal layer 13 in the vicinity of the first substrate 11. Similarly, it is supposed that the alignment control layer is not only formed between the second substrate 12 and the liquid crystal layer 13 so as to clearly divide therebetween but also may be formed between the second substrate 12 and the liquid crystal layer 13 so as to enter the liquid crystal layer 13 from the second substrate 12 surface (surface facing the liquid crystal layer 13) adjacent to the liquid crystal layer 13 in the vicinity of the second substrate 12.

However, it is difficult to clearly show the structure of the alignment control layer.

It is also supposed that among the two or more polymerizable compounds, the compounds having similar structures are preferentially polymerized by irradiation with active energy rays. As a result, the liquid crystal molecules are arranged in a region near each of the substrates and, at the same time, the pre-tilt direction is regulated to a predetermined direction, thereby controlling alignment.

### EXAMPLES

The present invention is described in further detail below by giving examples, but the present invention is not limited to these examples.

In the examples and comparative examples below, Tni, Δn, Δε, η, and γ₁ are specified as follows.
Tₙᵢ: nematic-isotropic liquid phase transition temperature (°C)
Δn: refractive index anisotropy at 25°C
Δε: dielectric anisotropy at 25°C
η: viscosity at 20°C (mPa·s)
γ₁: rotational viscosity at 25°C (mPa·s)

The liquid crystal display devices of the examples and comparative examples below were evaluated by methods described below with respect to image sticking, dropping marks, and pre-tilt stability.

### (Image sticking)

Image sticking of each of the liquid crystal display devices was evaluated by display of a predetermined fixed pattern within a display area for 1000 hours and then uniform display over the entire screen to visually observe the level of residual image of the fixed pattern based on the following 4 levels:
A: No residual image
B: Very slight residual image at an allowable level
C: Residual image at an unallowable level
D: Residual image at a very poor level

### (Dropping marks)

Dropping marks of a liquid crystal display device were evaluated by visually observing white dropping marks appearing on the surface of a full black display based on the following 4 levels:
A: No dropping marks
B: Slight dropping marks at an allowable level
C: Dropping marks at an unallowable level
D: Dropping marks at a very poor level

### (Pre-tilt stability)

The pre-tilt stability of a liquid crystal display device was evaluated by applying a predetermined voltage in a display area and then measuring an amount of pre-tilt shift before after application of the voltage.

### (EXAMPLE 1)

A first substrate (common-electrode substrate) provided with a transparent electrode layer, which included a transparent common electrode, and a color filter layer and a second substrate (pixel-electrode substrate) provided with a pixel electrode layer, which included transparent pixel electrodes driven by an active element, were formed. A liquid crystal composition LC-1 containing compounds selected from the general formula (I) and compounds selected from the general formula (II) was prepared. The constituent compounds and the ratios thereof are as follows.

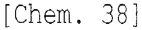

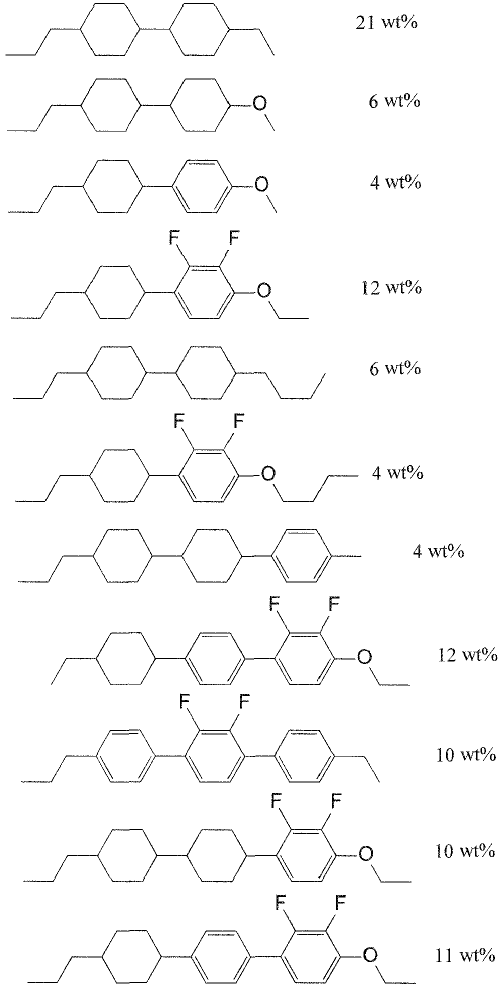

To 98.08 wt% of the liquid crystal composition LC-1, 1.5 wt% of a polymerizable compound shown below and

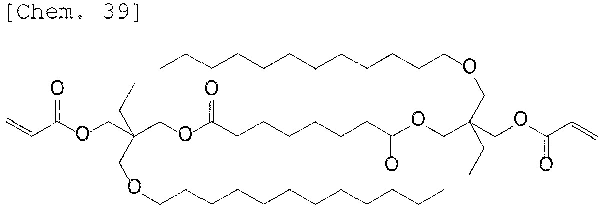

0.32 wt% of a polymerizable compound shown below were added.

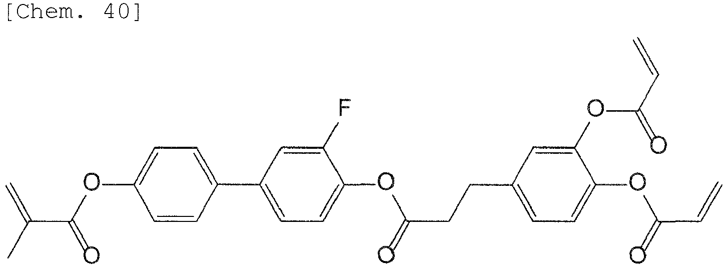

Further, 0.1 wt% of photopolymerization initiator Igacure 651 was added and uniformly dissolved to prepare a polymerizable liquid crystal composition CLC-1.

The polymerizable liquid crystal composition CLC-1 was held between the common-electrode substrate and the pixel-electrode substrate each not having an alignment film layer, and then a sealing material was cured to form a liquid crystal composition layer. In this case, the thickness of the liquid crystal composition layer was adjusted to 3.2 µm. by using a spacer having a thickness of 3.2 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, thereby producing a liquid crystal display device of Example 1. In this step, an alignment control layer containing the polymer of the polymerizable compounds having reactive groups was formed, and a pre-tilt angle was imparted to the liquid crystal molecules in the liquid crystal composition layer.

The pre-tilt angle is defined as follows. In the case of completely vertical alignment, the pre-tilt angle (θ) is 90°, while when the pre-tilt angle is imparted, the pre-tilt angle (θ) is smaller than 90°.

The liquid crystal display device of Example 1 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 88.3°.

As shown in a table below, it was found that the resultant liquid crystal display device of Example 1 exhibits excellent contrast and response speed, causes little dropping marks, and is also excellent in image-sticking.

**[Table 1]**

| | |
|---|---|
| T_{NI/}°C | 75.4 |
| Δn | 0.107 |
| n₀ | 1.485 |
| ε_{//} | 3.55 |
| ε_{⊥} | 6.45 |
| Δε | -2.9 |
| η/mPa·s | 20.2 |
| γ₁/mPa·s | 142 |
| Contrast | 1500 |
| Response speed/ms | 14.1 |
| Evaluation of dropping marks | A |
| Evaluation of image sticking | A |

### (EXAMPLE 2)

In the same experiment as in Example 1, to 98.5 wt% of the liquid crystal composition LC-1, 1.0 wt% of a polymerizable compound shown below and

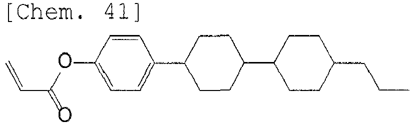

0.4 wt% of a polymerizable compound shown below were added.

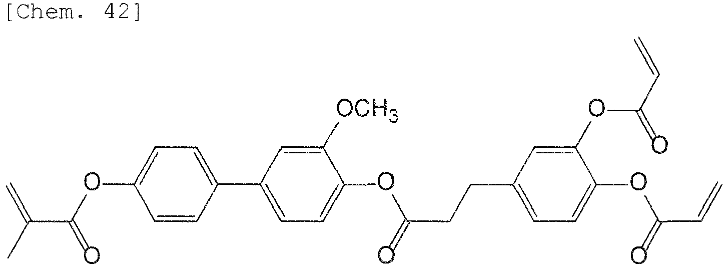

Further, 0.1 wt% of photopolymerization initiator Igacure 651 was added and uniformly dissolved to prepare a polymerizable liquid crystal composition CLC-1a.

The polymerizable liquid crystal composition CLC-1a was held between the common-electrode substrate and the pixel-electrode substrate each not having an alignment film layer, and then a sealing material was cured to form a liquid crystal composition layer. In this case, the thickness of the liquid crystal composition layer was adjusted to 3.2 µm by using a spacer having a thickness of 3.2 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, thereby producing a liquid crystal display device of Example 2.

The liquid crystal display device of Example 2 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 88.7°.

As shown in a table below, it was found that the resultant liquid crystal display device of Example 2 exhibits excellent contrast and response speed, causes little dropping marks, and is also excellent in image-sticking.

**[Table 2]**

| | |
|---|---|
| T_{NI/}°C | 75.4 |
| Δn | 0.107 |
| n₀ | 1.485 |
| ε_{//} | 3.55 |
| ε_{⊥} | 6.45 |
| Δε | -2.9 |
| η/mPa·s | 20.2 |
| γ₁/mPa·s | 142 |
| Contrast | 1450 |
| Response speed/ms | 14.3 |
| Evaluation of dropping marks | A |
| Evaluation of image sticking | A |

### (COMPARATIVE EXAMPLE 1)

A first substrate (common-electrode substrate) provided with a transparent electrode layer, which included a transparent common electrode, a color filter layer, and projections for controlling the alignment direction of a liquid crystal material and a second substrate (pixel-electrode substrate) provided with a pixel electrode layer, which included transparent pixel electrodes driven by an active element, and projections for controlling the alignment direction of a liquid crystal material were formed.

A vertical alignment film material was applied to each of the common-electrode substrate and the pixel-electrode substrate by a spin coating method, and the coating film was heated at 200°C to form a vertical alignment film of 100 nm on each of the substrates.

The liquid crystal composition CLC-1 was held between the common-electrode substrate and the pixel-electrode substrate each having the vertical alignment film formed thereon, and then a sealing material was cured to form a liquid crystal composition layer. In this case, the thickness of the liquid crystal composition layer was adjusted to 3.2 µm by using a spacer having a thickness of 3.2 µm.

As shown in a table below, it was found that the resultant liquid crystal display device of Comparative Example 1 is inferior in contrast, response speed, dropping marks, and image-sticking as compared with Example 1.

**[Table 3]**

| | |
|---|---|
| T_{NI/}°C | 75.4 |
| Δn | 0.107 |
| n₀ | 1.485 |
| ε_{//} | 3.55 |
| ε_{⊥} | 6.45 |
| Δε | -2.9 |
| η/mPa·s | 20.2 |
| γ₁/mPa·s | 142 |
| Contrast | 1300 |
| Response speed/ms | 20 |
| Evaluation of dropping marks | C |
| Evaluation of image sticking | B |

### (EXAPLE 3)

In the same experiment as in Example 1, the liquid crystal composition used was changed to a liquid crystal composition LC-2 containing compounds selected from the general formula (I) and compounds selected from the general formula (II). The constituent compounds and the content ratios thereof are as follows.

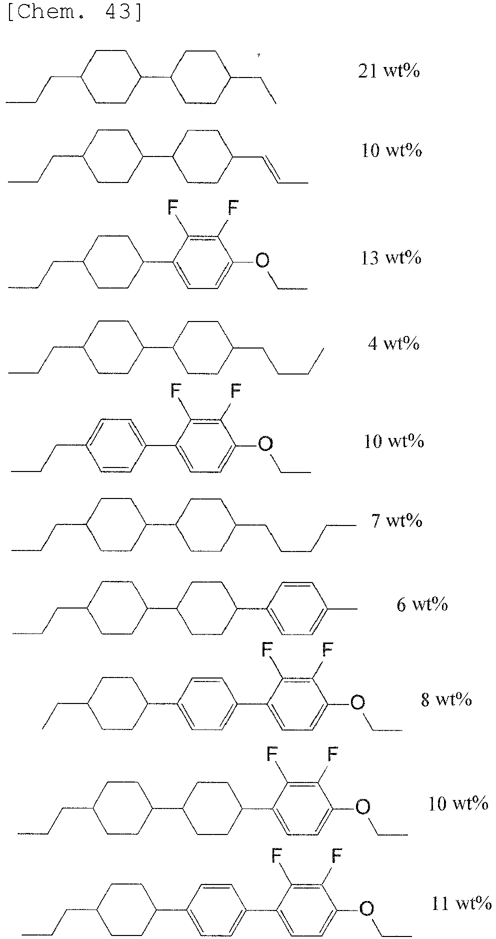

To 97.7 wt% of the liquid crystal composition LC-2, 1.8 wt% of a polymerizable compound shown below and

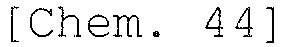

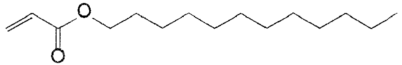

0.4 wt% of a polymerizable compound shown below were added.

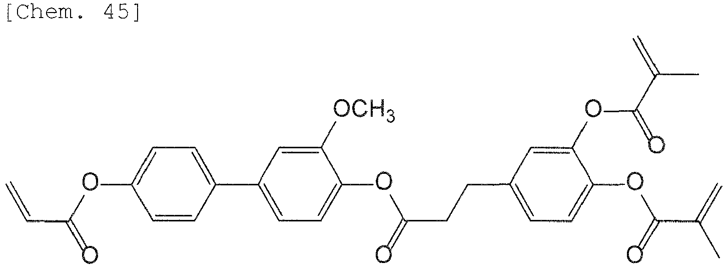

Further, 0.1 wt% of photopolymerization initiator Igacure 651 was added and uniformly dissolved to prepare a polymerizable liquid crystal composition CLC-2.

The polymerizable liquid crystal composition CLC-2 was held between the common-electrode substrate and the pixel-electrode substrate each not having an alignment film layer, and then a sealing material was cured to form a liquid crystal composition layer. In this case, the thickness of the liquid crystal composition layer was adjusted to 3.5 µm by using a spacer having a thickness of 3.5 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, thereby producing a liquid crystal display device of Example 3. The liquid crystal display device of Example 3 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 88.5°.

As shown in a table below, it was found that the resultant liquid crystal display device of Example 3 exhibits excellent contrast and response speed, causes little dropping marks, and is also excellent in image-sticking.

**[Table 4]**

| | |
|---|---|
| T_{NI/}°C | 74.1 |
| Δn | 0.097 |
| n₀ | 1.481 |
| ε_{//} | 3.36 |
| ε_{⊥} | 6.63 |
| Δε | -3.27 |
| η/mPa·s | 15.6 |
| γ₁/mPa·s | 100 |
| Contrast | 1800 |
| Response speed/ms | 21.2 |
| Evaluation of dropping marks | A |
| Evaluation of image sticking | A |

### (EXAMPLE 4)

In the same experiment as in Example 1, to 98.38 wt% of the liquid crystal composition LC-2, 1.2 wt% of a polymerizable compound shown below and

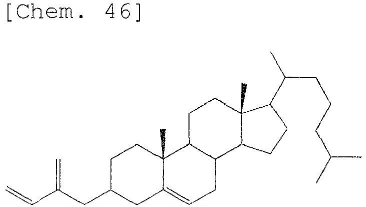

0.32 wt% of a polymerizable compound shown below were added.

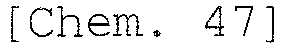

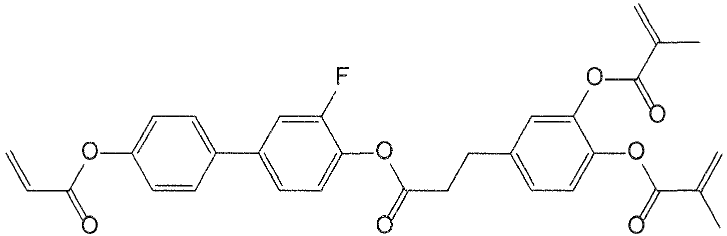

Further, 0.1 wt% of photopolymerization initiator Igacure 651 was added and uniformly dissolved to prepare a polymerizable liquid crystal composition CLC-2a.

The polymerizable liquid crystal composition CLC-2a was held between the common-electrode substrate and the pixel-electrode substrate each not having an alignment film layer, and then a sealing material was cured to form a liquid crystal composition layer. In this case, the thickness of the liquid crystal composition layer was adjusted to 3.5 µm by using a spacer having a thickness of 3.5 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, producing a liquid crystal display device of Example 4. The liquid crystal display device of Example 4 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 88.6°.

As shown in a table below, it was found that the resultant liquid crystal display device of Example 4 exhibits excellent contrast and response speed, causes little dropping marks, and is also excellent in image-sticking.

**[Table 5]**

| | |
|---|---|
| T_{NI/}°C | 74.1 |
| Δn | 0.097 |
| n₀ | 1.481 |
| ε_{//} | 3.36 |
| ε_{⊥} | 6.63 |
| Δε | -3.27 |
| η/mPa·s | 15.6 |
| γ₁/mPa·s | 100 |
| Contrast | 1830 |
| Response speed/ms | 21.0 |
| Evaluation of dropping marks | A |
| Evaluation of image sticking | A |

### (COMPARATIVE EXAMPLE 2)

In the same experiment as in Comparative Example 1, a liquid crystal composition layer was formed by using the liquid crystal composition LC-2. In this case, the thickness of the liquid crystal composition layer was adjusted to 3.8 µm by using a spacer having a thickness of 3.8 µm.

As shown in a table below, it was found that the resultant liquid crystal display device of Comparative Example 2 is inferior in contrast, response speed, dropping marks, and image-sticking as compared with Example 2.

**[Table 6]**

| | |
|---|---|
| T_{NI/}°C | 75.4 |
| Δn | 0.107 |
| n₀ | 1.485 |
| ε_{//} | 3.55 |
| ε_{⊥} | 6.45 |
| Δε | -2.9 |
| η/mPa·s | 20.2 |
| γ₁/mPa·s | 142 |
| Contrast | 1400 |
| Response speed/ms | 28 |
| Evaluation of dropping marks | C |
| Evaluation of image sticking | B |

### (EXAMPLE 5)

In the same experiment as in Example 1, the liquid crystal composition used was changed to a liquid crystal composition LC-3 containing compounds selected from the general formula (I) and compounds selected from the general formula (II). The constituent compounds and the content ratios thereof are as follows.

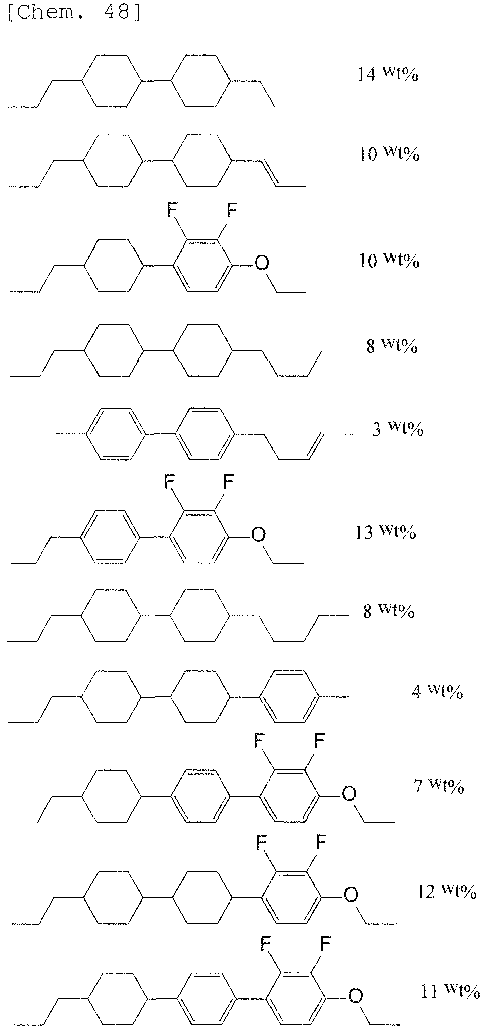

To 98.08 wt% of the liquid crystal composition LC-3, 1.5 wt% of a polymerizable compound shown below and

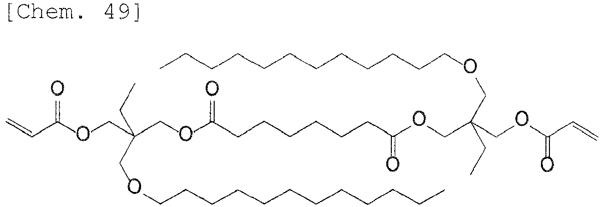

0.32 wt% of a polymerizable compound shown below were added.

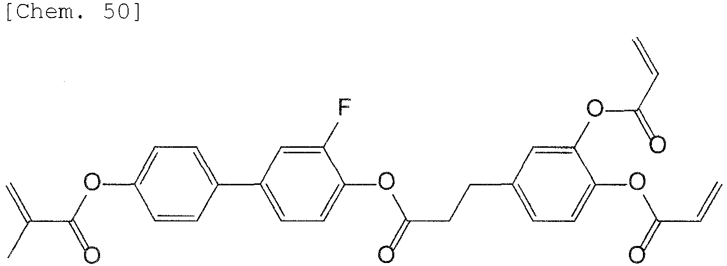

Further, 0.1 wt% of photopolymerization initiator Igacure 651 was added and uniformly dissolved to prepare a polymerizable liquid crystal composition CLC-3.

The polymerizable liquid crystal composition CLC-3 was held between the common-electrode substrate and the pixel-electrode substrate each not having an alignment film layer, and then a sealing material was cured to form a liquid crystal composition layer. In this case, the thickness of the liquid crystal composition layer was adjusted to 3.5 µm by using a spacer having a thickness of 3.5 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, producing a liquid crystal display device of Example 5. The liquid crystal display device of Example 5 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 88.7°.

As shown in a table below, it was found that the resultant liquid crystal display device of Example 5 exhibits excellent contrast and response speed, causes little dropping marks, and is also excellent in image-sticking.

**[Table 7]**

| | |
|---|---|
| T_{NI/}°C | 73.4 |
| Δn | 0.098 |
| n₀ | 1.437 |
| ε_{//} | 3.26 |
| ε_{⊥} | 6.63 |
| Δε | -3.37 |
| η/mPa·s | 15.5 |
| γ₁/mPa·s | 94 |
| Contrast | 1600 |
| Response speed/ms | 18.3 |
| Evaluation of dropping marks | A |
| Evaluation of image sticking | A |

### (EXAMPLE 6)

In the same experiment as in Example 1, to 98.0 wt% of the liquid crystal composition LC-3, 1.5 wt% of a polymerizable compound shown below and

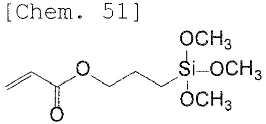

0.4 wt% of a polymerizable compound shown below were added.

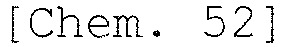

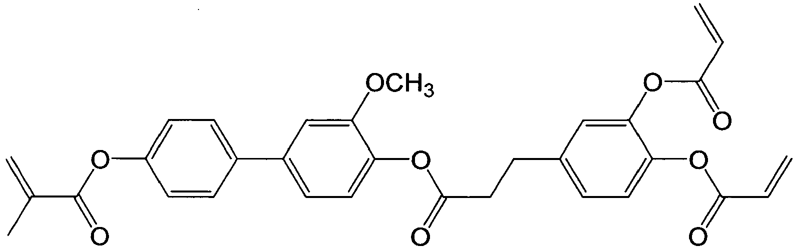

Further, 0.1 wt% of photopolymerization initiator Igacure 651 was added and uniformly dissolved to prepare a polymerizable liquid crystal composition CLC-3a.

The polymerizable liquid crystal composition CLC-3a was held between the common-electrode substrate and the pixel-electrode substrate each not having an alignment film layer, and then a sealing material was cured to form a liquid crystal composition layer. In this case, the thickness of the liquid crystal composition layer was adjusted to 3.5 µm by using a spacer having a thickness of 3.5 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, producing a liquid crystal display device of Example 6. The liquid crystal display device of Example 6 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 88.4°.

As shown in a table below, it was found that the resultant liquid crystal display device of Example 6 exhibits excellent contrast and response speed, causes little dropping marks, and is also excellent in image-sticking.

**[Table 8]**

| | |
|---|---|
| T_{NI/}°C | 73.4 |
| Δn | 0.098 |
| n₀ | 1.437 |
| ε_{//} | 3.26 |
| ε_{⊥} | 6.63 |
| Δε | -3.37 |
| η/mPa·s | 15.5 |
| γ₁/mPa·s | 94 |
| Contrast | 1640 |
| Response speed/ms | 18.5 |
| Evaluation of dropping marks | A |
| Evaluation of image sticking | A |

### (COMPARATIVE EXAMPLE 3)

In the same experiment as in Comparative Example 1, a liquid crystal composition layer was formed by using the liquid crystal composition LC-3. In this case, the thickness of the liquid crystal composition layer was adjusted to 3.5 µm by using a spacer having a thickness of 3.5 µm.

As shown in a table below, it was found that the resultant liquid crystal display device of Comparative Example 3 is inferior in contrast, response speed, dropping marks, and image-sticking as compared with Example 3.

**[Table 9]**

| | |
|---|---|
| T_{NI/}°C | 73.4 |
| Δn | 0.098 |
| n₀ | 1.437 |
| ε_{//} | 3.26 |
| ε_{⊥} | 6.63 |
| Δε | -3.37 |
| η/mPa·s | 15.5 |
| γ₁/mPa·s | 94 |
| Contrast | 1350 |
| Response speed/ms | 24 |
| Evaluation of dropping marks | C |
| Evaluation of image sticking | B |

### (EXAMPLE 7)

In the same experiment as in Example 1, the liquid crystal composition used was changed to a liquid crystal composition LC-4 containing compounds selected from the general formula (I) and compounds selected from the general formula (II). The constituent compounds and the content ratios thereof are as follows.

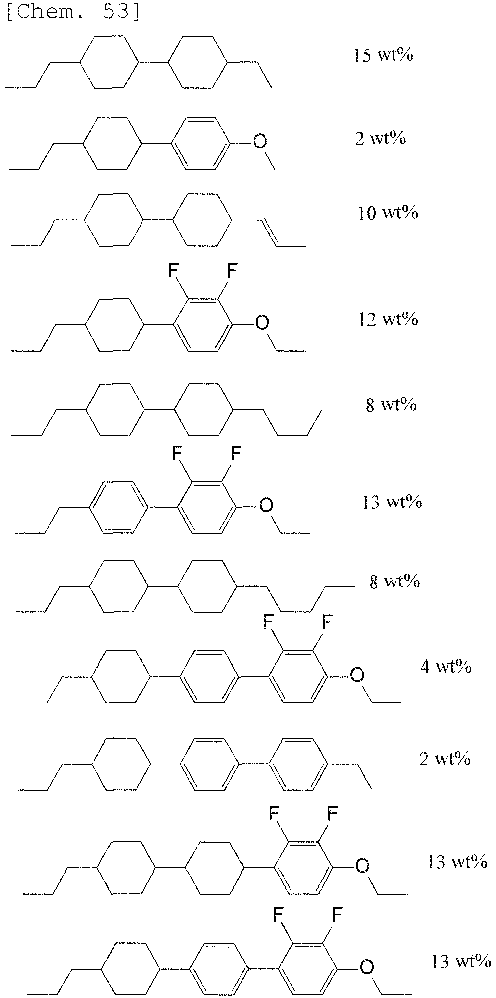

To 97.75 wt% of the liquid crystal composition LC-4, 1.8 wt% of a polymerizable compound shown below and

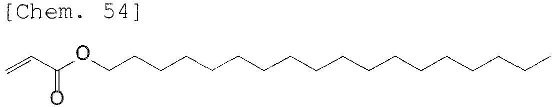

0.35 wt% of a polymerizable compound shown below were added.

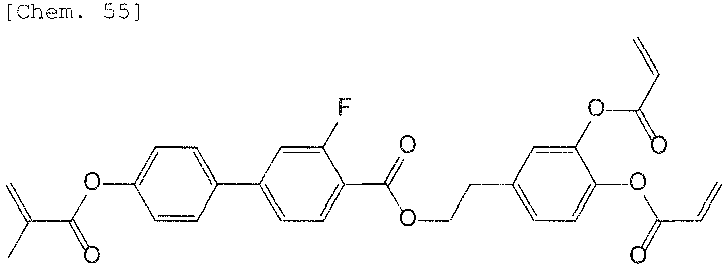

Further, 0.1 wt% of photopolymerization initiator Igacure 651 was added and uniformly dissolved to prepare a polymerizable liquid crystal composition CLC-4.

The polymerizable liquid crystal composition CLC-4 was held between the common-electrode substrate and the pixel-electrode substrate each not having an alignment film layer, and then a sealing material was cured to form a liquid crystal composition layer. In this case, the thickness of the liquid crystal composition layer was adjusted to 3.5 µm by using a spacer having a thickness of 3.5 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, producing a liquid crystal display device of Example 7. The liquid crystal display device of Example 7 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 88.8°.

As shown in a table below, it was found that the resultant liquid crystal display device of Example 7 exhibits excellent contrast and response speed, causes little dropping marks, and is also excellent in image-sticking.

**[Table 10]**

| | |
|---|---|
| T_{NI/}°C | 71.0 |
| Δn | 0.100 |
| n₀ | 1.482 |
| ε_{//} | 3.42 |
| ε_{⊥} | 7.09 |
| Δε | -3.67 |
| η/mPa·s | 16.2 |
| γ₁/mPa·s | 104 |
| Contrast | 1600 |
| Response speed/ms | 16.3 |
| Evaluation of dropping marks | A |
| Evaluation of image sticking | A |

### (EXAMPLE 8)

In the same experiment as in Example 1, to 98.05 wt% of the liquid crystal composition LC-4, 1.5 wt% of a polymerizable compound shown below and

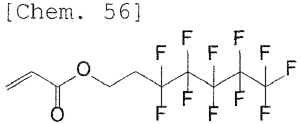

0.35 wt% of a polymerizable compound shown below were added.

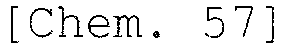

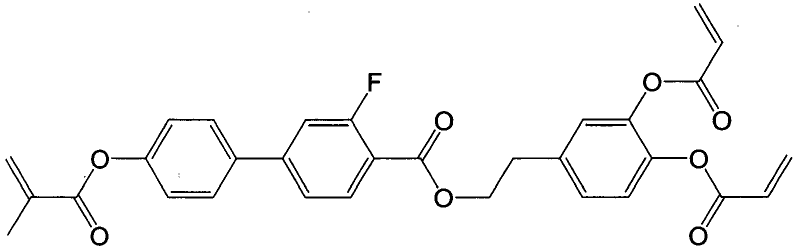

Further, 0.1 wt% of photopolymerization initiator Igacure 651 was added and uniformly dissolved to prepare a polymerizable liquid crystal composition CLC-4a.

The polymerizable liquid crystal composition CLC-4a was held between the common-electrode substrate and the pixel-electrode substrate each not having an alignment film layer, and then a sealing material was cured to form a liquid crystal composition layer. In this case, the thickness of the liquid crystal composition layer was adjusted to 3.5 µm by using a spacer having a thickness of 3.5 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, producing a liquid crystal display device of Example 8. The liquid crystal display device of Example 8 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 88.3°.

As shown in a table below, it was found that the resultant liquid crystal display device of Example 8 exhibits excellent contrast and response speed, causes little dropping marks, and is also excellent in image-sticking.

**[Table 11]**

| | |
|---|---|
| T_{NI/}°C | 71.0 |
| Δn | 0.100 |
| n₀ | 1.482 |
| ε_{//} | 3.42 |
| ε_{⊥} | 7.09 |
| Δε | -3.67 |
| η/mPa·s | 16.2 |
| γ₁/mPa·s | 104 |
| Contrast | 1660 |
| Response speed/ms | 16.9 |
| Evaluation of dropping marks | A |
| Evaluation of image sticking | A |

### (COMPARATIVE EXAMPLE 4)

In the same experiment as in Comparative Example 1, a liquid crystal composition layer was formed by using the liquid crystal composition LC-4. In this case, the thickness of the liquid crystal composition layer was adjusted to 3.5 µm by using a spacer having a thickness of 3.5 µm.

As shown in a table below, it was found that the resultant liquid crystal display device of Comparative Example 4 is inferior in contrast, response speed, dropping marks, and image-sticking as compared with Example 4.

**[Table 12]**

| | |
|---|---|
| T_{NI/}°C | 71.0 |
| Δn | 0.100 |
| n₀ | 1.482 |
| ε_{//} | 3.42 |
| ε_{⊥} | 7.09 |
| Δε | -3.67 |
| η/mPa·s | 16.2 |
| γ₁/mPa·s | 104 |
| Contrast | 1330 |
| Response speed/ms | 23 |
| Evaluation of dropping marks | C |
| Evaluation of image sticking | B |

### (EXAMPLE 9)

In the same experiment as in Example 1, the liquid crystal composition used was changed to a liquid crystal composition LC-5 containing compounds selected from the general formula (I) and compounds selected from the general formula (II). The constituent compounds and the content ratios thereof are as follows.

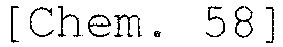

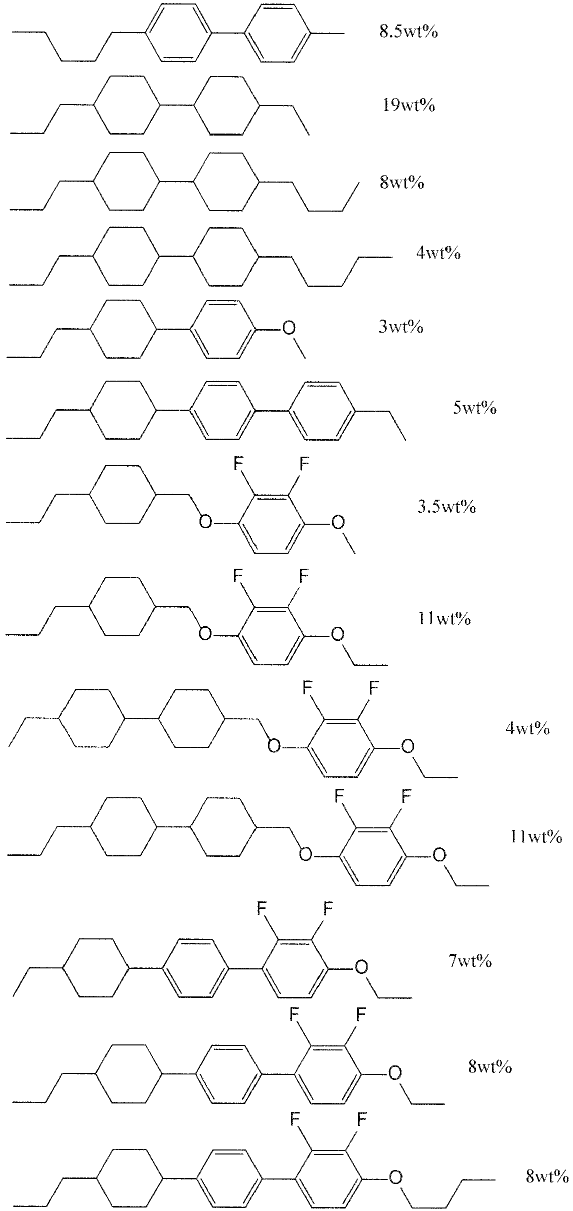

To 97.75 wt% of the liquid crystal composition LC-5, 1.8 wt% of a polymerizable compound shown below and

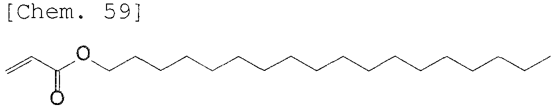

0.35 wt% of a polymerizable compound shown below were added.

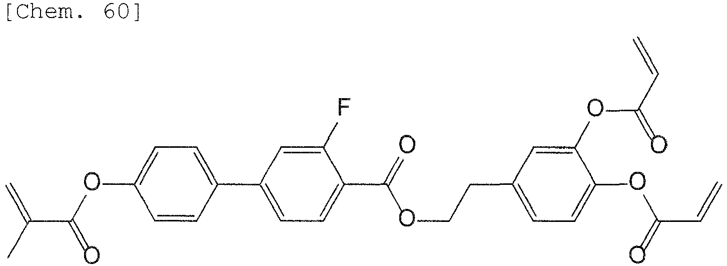

Further, 0.1 wt% of photopolymerization initiator Igacure 651 was added and uniformly dissolved to prepare a polymerizable liquid crystal composition CLC-5.

The polymerizable liquid crystal composition CLC-5 was held between the common-electrode substrate and the pixel-electrode substrate each not having an alignment film layer, and then a sealing material was cured to form a liquid crystal composition layer. In this case, the thickness of the liquid crystal composition layer was adjusted to 3.5 µm by using a spacer having a thickness of 3.5 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, producing a liquid crystal display device of Example 9. The liquid crystal display device of Example 9 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 88.9°.

As shown in a table below, it was found that the resultant liquid crystal display device of Example 9 exhibits excellent contrast and response speed, causes little dropping marks, and is also excellent in image-sticking.

**[Table 13]**

| | |
|---|---|
| T_{NI/}°C | 75.2 |
| Δn | 0.1002 |
| n₀ | 1.4818 |
| ε_{//} | 3.47 |
| ε_{⊥} | 6.68 |
| Δε | -3.21 |
| η/mPa·s | 16.4 |
| γ₁/mPa·s | 96 |
| Contrast | 1570 |
| Response speed/ms | 15.9 |
| Evaluation of dropping marks | A |
| Evaluation of image sticking | A |

### (COMPARATIVE EXAMPLE 5)

In the same experiment as in Comparative Example 1, a liquid crystal composition layer was formed by using the liquid crystal composition LC-5. In this case, the thickness of the liquid crystal composition layer was adjusted to 3.5 µm by using a spacer having a thickness of 3.5 µm.

As shown in a table below, it was found that the resultant liquid crystal display device of Comparative Example 5 is inferior in contrast, response speed, dropping marks, and image-sticking as compared with Example 9.

**[Table 14]**

| | |
|---|---|
| T_{NI/}°C | 75.2 |
| Δn | 0.1002 |
| n₀ | 1.4818 |
| ε_{//} | 3.47 |
| ε_{⊥} | 6.68 |
| Δε | -3.21 |
| η/mPa·s | 16.4 |
| γ₁/mPa·s | 96 |
| Contrast | 1240 |
| Response speed/ms | 21.4 |
| Evaluation of dropping marks | B |
| Evaluation of image sticking | B |

### (EXAMPLE 10)

In the same experiment as in Example 1, the liquid crystal composition used was changed to a liquid crystal composition LC-6 containing compounds selected from the general formula (I) and compounds selected from the general formula (II). The constituent compounds and the content ratios thereof are as follows.

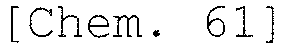

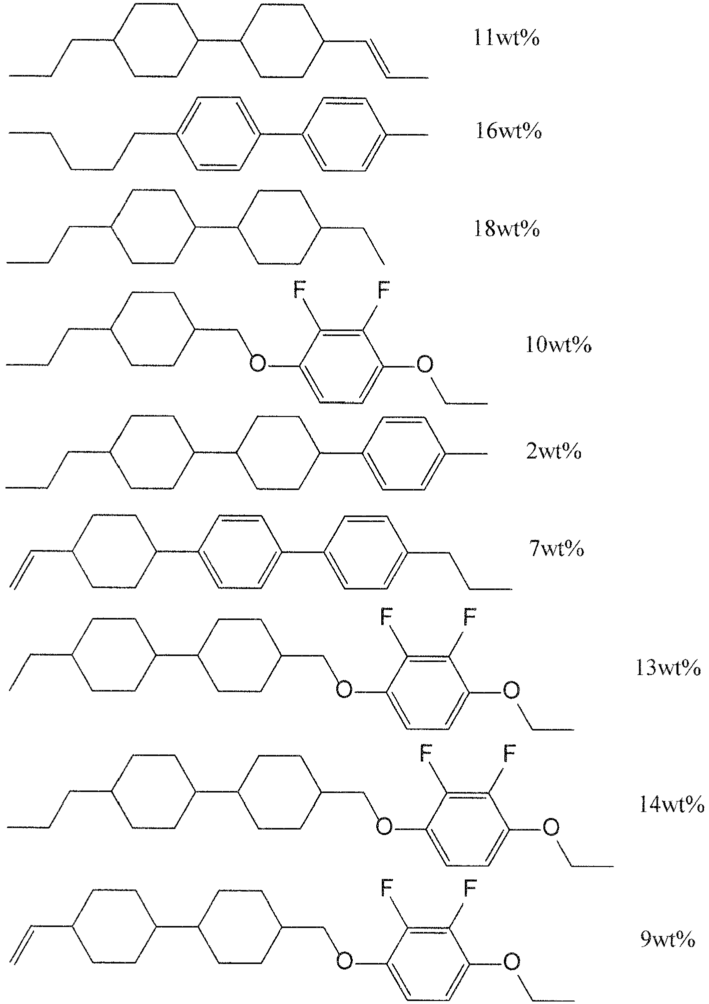

To 98.05 wt% of the liquid crystal composition LC-6, 1.5 wt% of a polymerizable compound shown below and

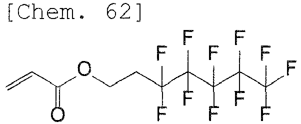

0.35 wt% of a polymerizable compound shown below were added.

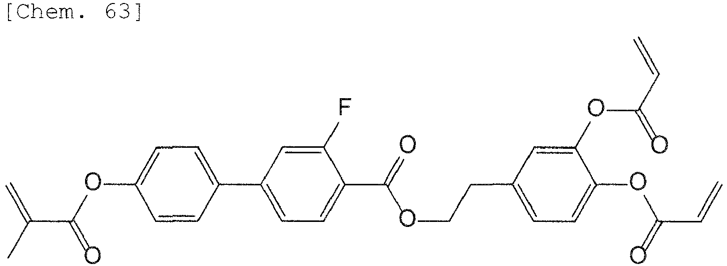

Further, 0.1 wt% of photopolymerization initiator Igacure 651 was added and uniformly dissolved to prepare a polymerizable liquid crystal composition CLC-6.

The polymerizable liquid crystal composition CLC-6 was held between the common-electrode substrate and the pixel-electrode substrate each not having an alignment film layer, and then a sealing material was cured to form a liquid crystal composition layer. In this case, the thickness of the liquid crystal composition layer was adjusted to 3.5 µm by using a spacer having a thickness of 3.5 µm. The resultant liquid crystal display was irradiated with ultraviolet light with a voltage applied, thereby curing the polymerizable compounds having reactive groups. The liquid crystal display device was irradiated with ultraviolet light with 100 mW for 10 minutes by using USH-250BY manufactured by Ushio Inc. as an irradiation apparatus, producing a liquid crystal display device of Example 10. The liquid crystal display device of Example 10 had the pre-tilt angle in different directions in four sections along the slits of the pixel electrodes, and the pre-tilt angle was maintained even in a state in which the alternating electric field was turned off after the polymerizable compounds were cured. The maintained pre-tilt angle was 89.0°.

As shown in a table below, it was found that the resultant liquid crystal display device of Example 10 exhibits excellent contrast and response speed, causes little dropping marks, and is also excellent in image-sticking.

**[Table 15]**

| | |
|---|---|
| T_{NI/}°C | 74.4 |
| Δn | 0.097 |
| n₀ | 1.484 |
| ε_{//} | 3.42 |
| ε_{⊥} | 6.62 |
| Δε | -3.20 |
| η/mPa·s | 16.7 |
| γ₁/mPa·s | 90 |
| Contrast | 1610 |
| Response speed/ms | 17.5 |
| Evaluation of dropping marks | A |
| Evaluation of image sticking | A |

### (COMPARATIVE EXAMPLE 6)

In the same experiment as in Comparative Example 1, a liquid crystal composition layer was formed by using the liquid crystal composition LC-6. In this case, the thickness of the liquid crystal composition layer was adjusted to 3.5 µm by using a spacer having a thickness of 3.5 µm.

As shown in a table below, it was found that the resultant liquid crystal display device of Comparative Example 6 is inferior in contrast, response speed, dropping marks, and image-sticking as compared with Example 10.

**[Table 16]**

| | |
|---|---|
| T_{NI/}°C | 74.4 |
| Δn | 0.097 |
| n₀ | 1.484 |
| ε_{//} | 3.42 |
| ε_{⊥} | 6.62 |
| Δε | -3.2 |
| η/mPa·s | 16.7 |
| γ₁/mPa·s | 90 |
| Contrast | 1330 |
| Response speed/ms | 23.1 |
| Evaluation of dropping marks | B |
| Evaluation of image sticking | B |

### (EXAMPLES 11 to 14 and COMPARATIVE EXAMPLES 7 to 10))

To the liquid crystal composition LC-1 (98.3% by mass) prepared in Example 1, a polymerizable compound (1.2% by mass) shown below and 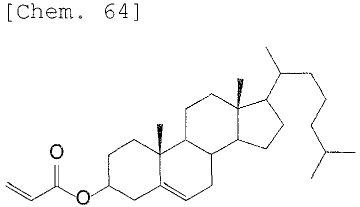 a polymerizable compound (0.4% by mass) shown below were added.

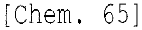

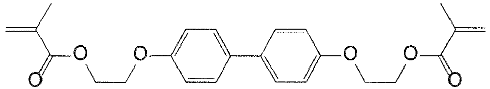

Further, a photopolymerization initiator "Igacure 651" (0.1% by mass) was added and uniformly dissolved to prepare a liquid crystal crystal-containing polymerization composition CLC-1b. A liquid crystal display device CLCD-1b was produced by the same method as in Example 1 except using the liquid crystal crystal-containing polymerization composition CLC-1b.

To the liquid crystal composition LC-3 (98.1% by mass) prepared in Example 3, a polymerizable compound (1.5% by mass) shown below and 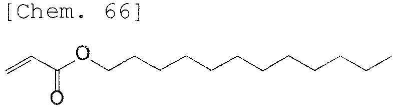 a polymerizable compound (0.3% by mass) shown below were added.

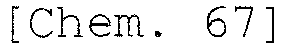

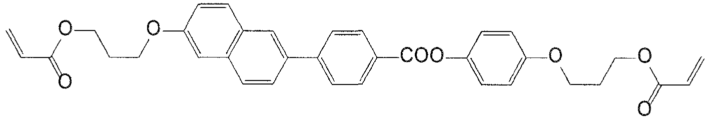

Further, photopolymerization initiator "Igacure 651" (0.1% by mass) was added and uniformly dissolved to prepare a liquid crystal-containing polymerization composition CLC-3b. A liquid crystal display device CLCD-3b was produced by the same method as in Example 1 except using the liquid crystal-containing polymerization composition CLC-3b.

To the liquid crystal composition LC-5 (98.0% by mass) prepared in Example 5, a polymerizable compound (1.5% by mass) shown below and 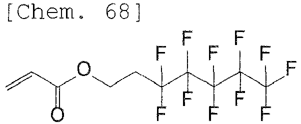 a polymerizable compound (0.4% by mass) shown below were added.

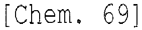

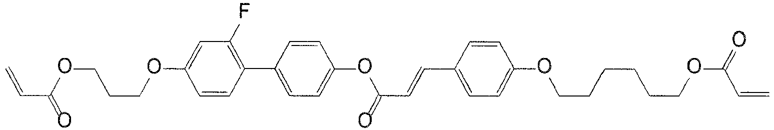

Further, photopolymerization initiator "Igacure 651" (0.1% by mass) was added and uniformly dissolved to prepare a liquid crystal-containing polymerization composition CLC-5b. A liquid crystal display device CLCD-5b was produced by the same method as in Example 1 except using the liquid crystal-containing polymerization composition CLC-5b.

To the liquid crystal composition LC-6 (98.0% by mass) prepared in Example 10, a polymerizable compound (1.5% by mass) shown below and 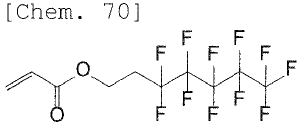 a polymerizable compound (0.4% by mass) shown below were added.

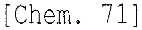

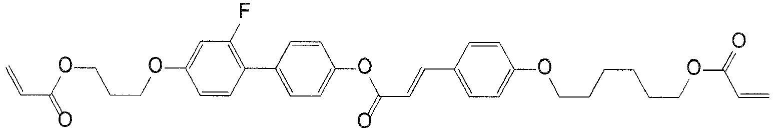

Further, photopolymerization initiator "Igacure 651" (0.1% by mass) was added and uniformly dissolved to prepare a liquid crystal-containing polymerization composition CLC-6b. A liquid crystal display device CLCD-6b was produced by the same method as in Example 1 except using the liquid crystal-containing polymerization composition CLC-6b.

The liquid crystal display devices CLCD-1b (Comparative Example 7), CLCD-3b (Comparative Example 8), CLCD-5b (Comparative Example 9), and CLCD-10b (Comparative Example 10), the liquid crystal display device CLCD-1 of Example 1 (Example 11), the liquid crystal display device CLCD-3 Example 5 (Example 12), the liquid crystal display device CLCD-5 of Example 9 (Example 13), and the liquid crystal display device CLCD-10 of Example 10 (Example 14) were evaluated with respect to pre-tilt stability. A table below shows a small amount of pre-tilt shift and excellent stability. That is, it is found that a liquid crystal display device having good alignment stability with time can be produced by using an alignment control layer in which a change with time is significantly suppressed.

**[Table 17]**

| | | Evaluation of pre-tilt stability Amount of pre-tilt shift/° |
|---|---|---|
| Example 11 | CLCD-1 | -0.6 |
| Example 12 | CLCD-3 | -0.7 |
| Example 13 | CLCD-5 | -0.6 |
| Example 14 | CLCD-10 | -0.5 |
| Comparative Example 7 | CLCD-1b | -1.5 |
| Comparative Example 8 | CLCD-3b | -2.1 |
| Comparative Example 9 | CLCD-5b | -3.0 |
| Comparative Example 10 | CLCD-10b | -3.1 |

### Reference Signs List

10 ... liquid crystal display device, 11 ... first substrate, 12 ... second substrate, 13 ... liquid crystal layer, 14 ... common electrode, 15 ... pixel electrode, 18 ... color filter, 19 ... liquid crystal molecule

## Claims

1. A liquid crystal display device comprising a liquid crystal layer which contains a liquid crystal composition and which is held between a first substrate having a common electrode and a second substrate having a plurality of pixels and pixel electrodes of the respective pixels,
wherein one or both of the first substrate and the second substrate have, without having an alignment film, an alignment control layer formed by using one or more tri- or higher-functional (meth)acrylate compounds and one or more di- or mono-functional (meth)acrylate compounds; and
the liquid crystal composition contains a compound represented by general formula (I) below 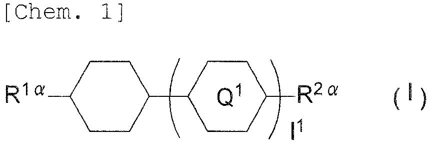 (in the formula, R^{1α} and R^{2α} each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; Q¹ represents a 1,4-phenylene group or a trans-1,4-cyclohexylene group; I¹ represents 1 or 2, and when I¹ is 2, two Q¹ may be the same or different) and a compound represented by general formula (II) below 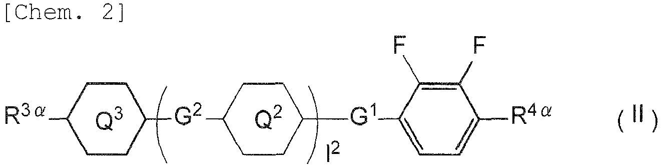 (in the formula, R^{3α} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; R^{4α} represents an alkyl group having 1 to 8 carbon atoms, an alkenyl group having 4 to 8 carbon atoms, an alkoxy group having 1 to 8 carbon atoms, or an alkenyloxy group having 3 to 8 carbon atoms; Q² and Q³ each independently represent a 1,4-phenylene group or a trans-1,4-cyclohexylene group; G¹ and G² each independently represent a single bond, -CH₂CH₂-, -CH₂O-, -OCH₂-, -CF₂O-, or -OCF₂-; I² represents 0, 1, or 2, and when I² is 2, two each of Q² and G² may be the same or different).

2. The liquid crystal display device according to Claim 1, wherein the tri- or higher-functional (meth)acrylate compounds are each a compound represented by general formula (XOa), 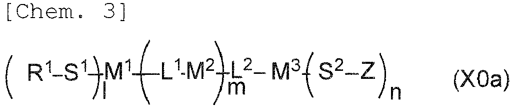
(in the formula, Z represents a hydrogen atom, an alkyl group having 1 to 8 carbon atoms, a halogenated alkyl group having 1 to 8 carbon atoms, an alkoxy group having 1 to 8 carbon atoms, a halogenated alkoxy group having 1 to 8 carbon atoms, a halogen, a cyano group, a nitro group, or R²; S¹ and S² each independently represent an alkylene group having 1 to 12 carbon atoms or a single bond, one -CH₂- or two or more unadjacent -CH₂- in the alkylene group may be substituted by -O-, -COO-, -OCO-, or -OCOO-;
R¹ and R² each independently represent a hydrogen atom or any one of formula (R-1) to formula (R-15), 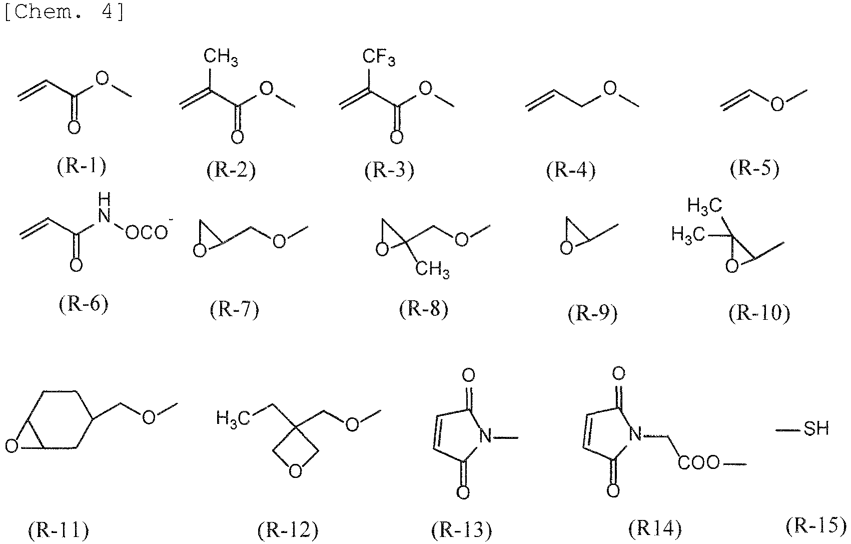
L¹ and L² each independently represent a single bond, -O-, - S-, -CH₂-, -OCH₂-, -CH₂O-, -CO-, -C₂H₄-, -COO-, -OCO-, - OCOOCH₂-, -CH₂OCOO-, -OCH₂CH₂O-, -CO-NR^{a}-, -NR^{a}-CO-, -SCH₂-, - CH₂S-, -CH=CR^{a}-COO-, -CH=CR^{a}-OCO-, -COO-CR^{a}=CH-, -OCO-CR^{a}=CH-, -COO-CR^{a}=CH-COO-, -COO-CR^{a}=CH-OCO-, -OCO-CR^{a}=CH-COO-, -OCO-CR^{a}=CH-OCO-, -COOC₂H₄-, -OCOC₂H₄-, -C₂H₄OCO-, -(CH₂)ⱼ-C(=O)-O-, -(CH₂)ⱼ-O-(C=O)-, -O-(C=O)-(CH₂)ⱼ-, -(C=O)-O-(CH₂)ⱼ-, - CH₂OCO-, -COOCH₂-, -OCOCH₂-, -CH=CH-, -CF=CF-, -CF=CH-, - CH=CF-, -CF₂-, -CF₂O-, -OCF₂-, -CF₂CH₂-, -CH₂CF₂-, -CF₂CF₂-, or -C≡C- (wherein R^{a} each independently represent a hydrogen atom or an alkyl group having 1 to 4 carbon atoms, and j represents an integer of 1 to 4);
M¹ and M³ each independently represent an aromatic ring or an aliphatic ring;
M² represents a 1,4-phenylene group, a 1,4-cyclohexylene group, a pyridine-2,5-diyl group, a pyrimidine-2,5-diyl group, a naphthalene-2,6-diyl group, a naphthalene-1,4-diyl group, a tetrahydronaphthalene-2,6-diyl group, or a 1,3-dioxane-2,5-diyl group;
M¹, M², and M³ may be each independently unsubstituted or substituted by an alkyl group having 1 to 8 carbon atoms, a halogenated alkyl group having 1 to 8 carbon atoms, an alkoxy group having 1 to 8 carbon atoms, a halogen, a cyano group, or a nitro group;
l and n each independently represent an integer of 0, 1, 2, or 3, l + n represents 3 or more, when l represents 0; Z represents any one of the groups of the formula (R-1) to the formula (R-15), and when n represents 0, R¹ represents any one of the groups of the formula (R-1) to the formula (R-15) ;
m represents an integer of 0 to 4, when a plurality of each of R¹, R², Z, S¹, and S² are present, they may be the same or different, when a plurality of each of L¹ and M² are present, they may be the same or different, and at least one L¹ represents a single bond); and
the di- or mono-functional (meth)acrylate compounds are each a compound selected from the group consisting of a compound represented by general formula (X1a), 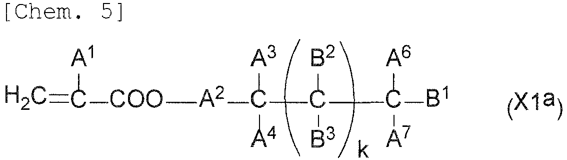
(in the formula, A¹ represents a hydrogen atom or a methyl group,
A² represents a single bond or an alkylene group having 1 to 15 carbon atoms (wherein one or two or more methylene groups in the alkylene group may be each independently substituted by an oxygen atom, -CO-, -COO-, or -OCO- so that oxygen atoms are not directly bonded to each other, and one or two or more hydrogen atoms in the alkylene group may be each independently substituted by a fluorine atom, a methyl group, or an ethyl group);
A³ and A⁶ each independently represent a hydrogen atom, a halogen atom, or an alkyl group having 1 to 18 carbon atoms (wherein one or two or more methylene groups in the alkyl group may be each independently substituted by an oxygen atom, -CO-, -COO-, or -OCO- so that oxygen atoms are not directly bonded to each other, and one or two or more hydrogen atoms in the alkyl group may be each independently substituted by a halogen atom or an alkyl group having 1 to 17 carbon atoms);
A⁴ and A⁷ each independently represent a hydrogen atom, a halogen atom, or an alkyl group having 1 to 10 carbon atoms (wherein one or two or more methylene groups in the alkyl group may be each independently substituted by an oxygen atom, -CO-, -COO-, or -OCO- so that oxygen atoms are not directly bonded to each other, and one or two or more hydrogen atoms in the alkyl group may be each independently substituted by a halogen atom or an alkyl group having 1 to 9 carbon atoms);
k represents 1 to 40;
B¹, B², and B³ each independently represent a hydrogen atom, a linear or branched alkyl group having 1 to 10 carbon atoms (wherein one or two or more methylene groups in the alkyl group may be each independently substituted by an oxygen atom, -CO-, -COO-, or -OCO- so that oxygen atoms are not directly bonded to each other, and one or two or more hydrogen atoms in the alkyl group may be each independently substituted by a halogen atom or an trialkoxysilyl group having 3 to 6 carbon atoms) or general formula (I-b) below, 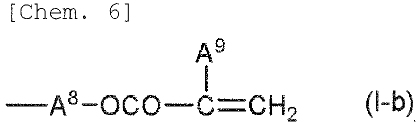
(in the formula, A⁹ represents a hydrogen atom or a methyl group,
A⁸ represents a single bond or an alkylene group having 1 to 15 carbon atoms (wherein one or two or more methylene groups in the alkylene group may be each independently substituted by an oxygen atom, -CO-, -COO-, or -OCO- so that oxygen atoms are not directly bonded to each other, and one or two or more hydrogen atoms in the alkylene group may be each independently substituted by a fluorine atom, a methyl group, or an ethyl group), and among B¹, B², and B³ present in a total of 2k + 1, the number of groups represented by the general formula (I-b) is 0 or 1), and a compound represented by general formula (X1b) 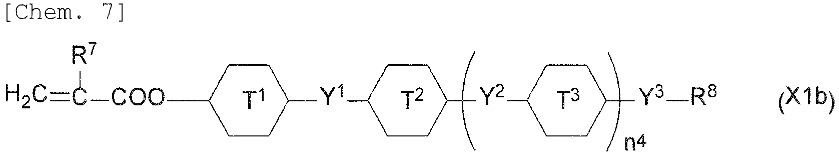
(in the formula, R⁷ represents a hydrogen atom or a methyl group;
6-member rings T¹, T², and T³ each independently represent any one of the following: 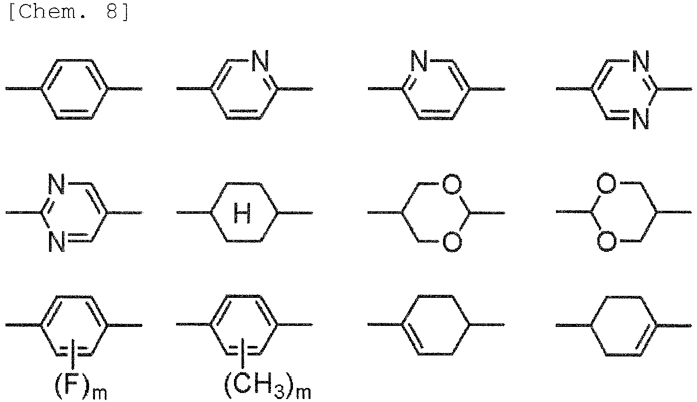
(wherein m represents an integer of 1 to 4);
n⁴ represents 0 or 1;
Y¹ and Y² each independently represent a single bond, - CH₂CH₂-, -CH₂O-, -OCH₂-, -COO-, -OCO-, -C=C-, -CH=CH-, - CF=CF-, -(CH₂)₄-, -CH₂CH₂CH₂O-, -OCH₂CH₂CH₂-, -CH₂=CHCH₂CH₂-, or -CH₂CH₂CH=CH-;
Y³ represents a single bond, -COO-, or -OCO-; and
R⁸ represents a hydrocarbon group having 1 to 18 carbon atoms), and a compound represented by general formula (X1c), 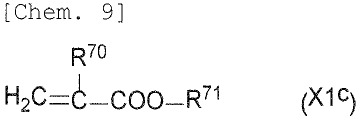
(in the formula, R⁷⁰ represents a hydrogen atom or a methyl group, and R⁷¹ represents a hydrocarbon group having a condensed ring).

3. The liquid crystal display device according to Claim 1 or 2, wherein the pixel electrodes have slits.

4. The liquid crystal display device according to Claim 1 or 2, wherein at least one of the first substrate and the second substrate has a structure for specifying a pre-tilt direction.

5. The liquid crystal display device according to any one of Claims 1 to 4, further comprising a passivation film provided at least either between the first substrate and the liquid crystal layer or between the second substrate and the liquid crystal layer.

6. The liquid crystal display device according to any one of Claims 1 to 5, further comprising a planarization film provided at least either between the first substrate and the liquid crystal layer or between the second substrate and the liquid crystal layer.

7. A method for manufacturing a liquid crystal display device including a liquid crystal layer which contains a liquid crystal composition and which is held between a first substrate having a common electrode and a color filter layer and a second substrate having a plurality of pixels and pixel electrodes of the respective pixels, each of the pixels having two or more regions having different pre-tilt directions, the method comprising:
holding, between the first substrate and the second substrate without providing an alignment film on one or both of the substrates, a liquid crystal-containing polymerization composition containing a compound represented by general formula (I) below 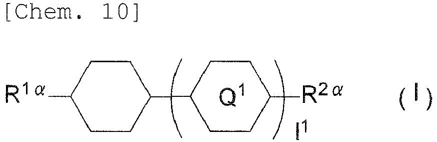 (in the formula, R^{1α} and R^{2α} each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; Q¹ represents a 1,4-phenylene group or a trans-1,4-cyclohexylene group; I¹ represents 1 or 2, and when I¹ is 2, two Q¹ may be the same or different) and a compound represented by general formula (II) below 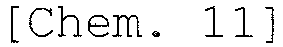 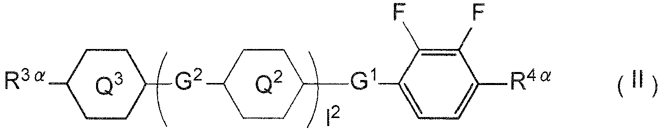
(in the formula, R^{3α} represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; R^{4α} represents an alkyl group having 1 to 8 carbon atoms, an alkenyl group having 4 to 8 carbon atoms, an alkoxy group having 1 to 8 carbon atoms, or an alkenyloxy group having 3 to 8 carbon atoms; Q² and Q³ each independently represent a 1,4-phenylene group or a trans-1,4-cyclohexylene group; G¹ and G² each independently represent a single bond, -CH₂CH₂-, -CH₂O-, -OCH₂-, -CF₂O-, or -OCF₂-; and I² represents 0, 1, or 2, and when I² is 2, two each of Q² and G² may be the same or different), one or more tri- or higher-functional (meth)acrylate compounds, and one or more di- or mono-functional (meth)acrylate compounds; and
polymerizing the two or more polymerizable compounds between the pixel electrode and the common electrode by irradiation with active energy rays while applying a voltage for imparting a pre-tilt angle to liquid crystal molecules in the liquid crystal-containing polymerization composition, and, at the same time, forming an alignment control layer between the liquid crystal layer and each of the first substrate and the second substrate by using the liquid crystal-containing polymerization composition as the liquid crystal composition.

8. The method for manufacturing a liquid crystal display device according to Claim 7, wherein the active energy ray is ultraviolet light having a plurality of spectra.

9. The method for manufacturing a liquid crystal display device according to Claim 7 or 8, wherein the pixel electrodes have slits, or at least one of the first substrate an the second substrate has a structure for specifying a pre-tilt direction.

## Patentansprüche

1. Flüssigkristallanzeigevorrichtung, umfassend eine Flüssigkristallschicht, welche eine Flüssigkristallzusammensetzung enthält, und die zwischen einem ersten Substrat mit einer gemeinsamen Elektrode und einem zweiten Substrat mit einer Vielzahl von Pixeln und Pixelelektroden der entsprechenden Pixel gehalten wird,
wobei eines oder beide aus dem ersten Substrat und dem zweiten Substrat, ohne einen Ausrichtungsfilm aufzuweisen, eine Ausrichtungskontrollschicht aufweisen, gebildet durch Verwenden von einem oder mehreren tri- oder höher-funktionellen (Meth)acrylatverbindungen und einer oder mehreren di- oder mono-funktionellen (Meth)acrylatverbindungen; und
die Flüssigkristallzusammensetzung enthält eine Verbindung, dargestellt durch die folgende allgemeine Formel (I) 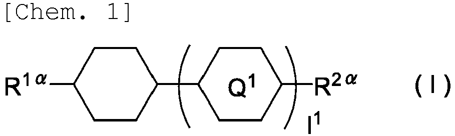 (in der Formel stellen R^{1α} und R^{2α} jeweils unabhängig eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen dar; Q¹ stellt eine 1,4-Phenylengruppe oder eine trans-1,4-Cyclohexylengruppe dar; I¹ stellt 1 oder 2 dar, und wenn I¹ 2 ist, können zwei Q¹ gleich oder verschieden sein) sowie eine durch die folgende allgemeine Formel (II) dargestellte Verbindung 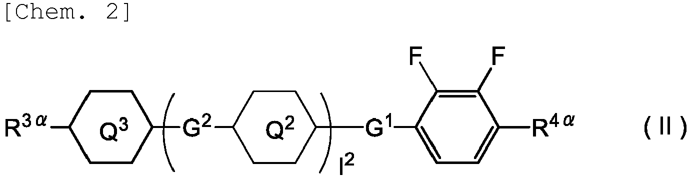 (in der Formel stellt R^{3α} eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen dar; R^{4α} stellt eine Alkylgruppe mit 1 bis 8 Kohlenstoffatom(en), eine Alkenylgruppe mit 4 bis 8 Kohlenstoffatomen, eine Alkoxygruppe mit 1 bis 8 Kohlenstoffatom(en) oder eine Alkenyloxygruppe mit 3 bis 8 Kohlenstoffatomen dar; Q² und Q³ stellen jeweils unabhängig eine 1,4-Phenylengruppe oder eine trans-1,4-Cyclohexylengruppe dar; G¹ und G² stellen jeweils unabhängig eine Einfachbindung, -CH₂CH₂-, -CH₂O-, -OCH₂-, -CF₂O- oder -OCF₂- dar; I² stellt 0, 1 oder 2 dar, und wenn I² 2 ist, können jeweils zwei aus Q² und G² gleich oder verschieden sein).

2. Flüssigkristallanzeigevorrichtung gemäß Anspruch 1, wobei die tri- oder höher-funktionellen (Meth)acrylatverbindungen jeweils eine Verbindung sind, dargestellt durch die allgemeine Formel (XOa), 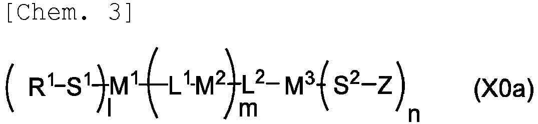
(in der Formel stellt Z ein Wasserstoffatom, eine Alkylgruppe mit 1 bis 8 Kohlenstoffatom(en), eine halogenierte Alkylgruppe mit 1 bis 8 Kohlenstoffatom(en), eine Alkoxygruppe mit 1 bis 8 Kohlenstoffatom(en), eine halogenierte Alkoxygruppe mit 1 bis 8 Kohlenstoffatom(en), ein Halogen, eine Cyanogruppe, eine Nitrogruppe oder R² dar; S¹ und S² stellen jeweils unabhängig eine Alkylengruppe mit 1 bis 12 Kohlenstoffatom(en) oder eine Einfachbindung dar, eine Gruppe -CH₂- oder zwei oder mehrere nichtbenachbarte Gruppen -CH₂- in der Alkylengruppe können durch -O-, -COO-, -OCO- oder -OCOO- ersetzt sein;
R¹ und R² stellen jeweils unabhängig ein Wasserstoffatom oder eine beliebige Gruppe aus Formel (R-1) bis Formel (R-15) dar 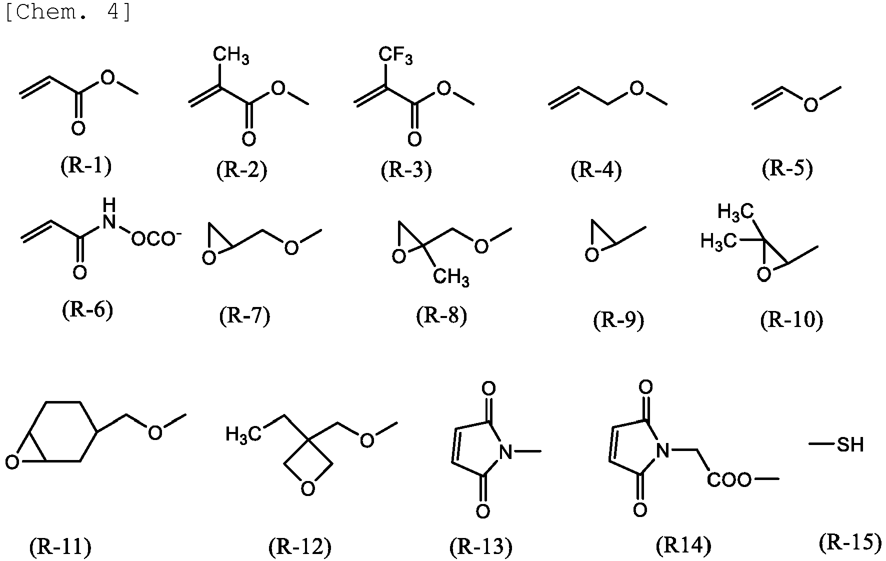
L¹ und L² stellen jeweils unabhängig eine Einfachbindung, -O-, -S-, -CH₂-, -OCH₂-, -CH₂O-, -CO-, -C₂H₄-, -COO-, -OCO-, -OCOOCH₂-, -CH₂OCOO-, -OCH₂CH₂O-, -CO-NR^{a}-, -NR^{a}-CO-, -SCH₂-, -CH₂S-, -CH=CR^{a}-COO-, -CH=CR^{a}-OCO-, -COO-CR^{a}=CH-, -OCO-CR^{a}=CH-, -COO-CR^{a}=CH-COO-, -COO-CR^{a}=CH-OCO-, -OCO-CR^{a}=CH-COO-, -OCO-CR^{a}=CH-OCO-, -COOC₂H₄-, -OCOC₂H₄-, -C₂H₄OCO-, -(CH₂)ⱼ-C(=O)-O-, -(CH₂)ⱼ-O-(C=O)-, -O-(C=O)-(CH₂)ⱼ-, -(C=O)-O-(CH₂)ⱼ-, -CH₂OCO-, -COOCH₂-, -OCOCH₂-, -CH=CH-, -CF=CF-, -CF=CH-, -CH=CF-, -CF₂-, -CF₂O-, -OCF₂-, -CF₂CH₂-, -CH₂CF₂-, -CF₂CF₂- oder -C≡C- dar (worin R^{a} jeweils unabhängig ein Wasserstoffatom oder eine Alkylgruppe mit 1 bis 4 Kohlenstoffatom(en) darstellt, und j stellt eine ganze Zahl von 1 bis 4 dar);
M¹ und M³ stellen jeweils unabhängig einen aromatischen Ring oder einen aliphatischen Ring dar;
M² stellt eine 1,4-Phenylengruppe, eine 1,4-Cyclohexylengruppe, eine Pyridin-2,5-diylgruppe, eine Pyrimidin-2,5-diylgruppe, eine Naphthalin-2,6-diylgruppe, eine Naphthalin-1,4-diylgruppe, eine Tetrahydronaphthalin-2,6-diylgruppe oder eine 1,3-Dioxan-2,5-diylgruppe dar;
M¹, M² und M³ können jeweils unabhängig unsubstituiert sein oder substituiert sein mit einer Alkylgruppe mit 1 bis 8 Kohlenstoffatom(en), einer halogenierten Alkylgruppe mit 1 bis 8 Kohlenstoffatom(en), einer Alkoxygruppe mit 1 bis 8 Kohlenstoffatom(en), einem Halogen, einer Cyanogruppe oder einer Nitrogruppe;
l und n stellen jeweils unabhängig eine ganze Zahl von 0, 1, 2 oder 3 dar, l + n stellt 3 oder mehr dar, wenn l 0 darstellt; Z stellt eine der Gruppen der Formel (R-1) bis Formel (R-15) dar, und wenn n 0 darstellt, stellt R¹ eine der Gruppen der Formel (R-1) bis Formel (R-15) dar;
m stellt eine ganze Zahl von 0 bis 4 dar, wenn eine Mehrzahl von jeweils R¹, R², Z, S¹ und S² anwesend sind, können sie gleich oder verschieden sein, wenn eine Mehrzahl von jedem aus L¹ und M² anwesend sind, können sie gleich oder verschieden sein, und wenigstens eine Gruppe L¹ stellt eine Einfachbindung dar); und
die di- oder mono-funktionellen (Meth)acrylatverbindungen sind jeweils eine Verbindung, ausgewählt aus der Gruppe, bestehend aus einer Verbindung, dargestellt durch die allgemeine Formel (X1a), 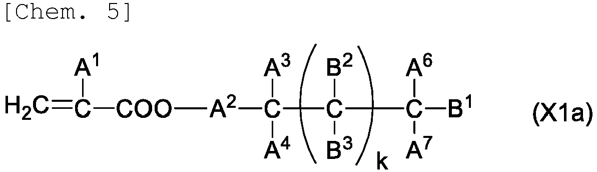
(in der Formel stellt A¹ ein Wasserstoffatom oder eine Methylgruppe dar,
A² stellt eine Einfachbindung oder eine Alkylengruppe mit 1 bis 15 Kohlenstoffatom(en) dar (wobei ein oder zwei oder mehrere Methylengruppen in der Alkylengruppe jeweils unabhängig ersetzt sein können mit einem Sauerstoffatom, -CO-, -COO- oder -OCO-, so dass Sauerstoffatome nicht direkt aneinander gebunden sind, und ein oder zwei oder mehrere Wasserstoffatome in der Alkylengruppe können jeweils unabhängig ersetzt sein durch ein Fluoratom, eine Methylgruppe oder eine Ethylgruppe);
A³ und A⁶ stellen jeweils unabhängig ein Wasserstoffatom, ein Halogenatom oder eine Alkylgruppe mit 1 bis 18 Kohlenstoffatom(en) dar (worin eine oder zwei oder mehrere Methylengruppen in der Alkylgruppe jeweils unabhängig ersetzt sein können durch ein Sauerstoffatom, -CO-, -COO- oder -OCO-, so dass Sauerstoffatome nicht direkt miteinander verbunden sind, und ein oder zwei oder mehrere Wasserstoffatome in der Alkylgruppe können unabhängig ersetzt sein durch ein Halogenatom oder eine Alkylgruppe mit 1 bis 17 Kohlenstoffatom(en));
A⁴ und A⁷ stellen jeweils unabhängig ein Wasserstoffatom, ein Halogenatom oder eine Alkylgruppe mit 1 bis 10 Kohlenstoffatom(en) dar (wobei eine oder zwei oder mehrere Methylengruppen in der Alkylgruppe jeweils unabhängig durch ein Sauerstoffatom, -CO-, -COO- oder -OCO- ersetzt sein können, so dass Sauerstoffatome nicht direkt miteinander verbunden sind, und ein oder zwei oder mehrere Wasserstoffatome in der Alkylgruppe können jeweils unabhängig durch ein Halogenatom oder eine Alkylgruppe mit 1 bis 9 Kohlenstoffatom(en) ersetzt sein);
k stellt 1 bis 40 dar;
B¹, B² und B³ stellen jeweils unabhängig ein Wasserstoffatom, eine lineare oder verzweigte Alkylgruppe mit 1 bis 10 Kohlenstoffatom(en) dar (wobei ein oder zwei oder mehrere Methylengruppen in der Alkylgruppe jeweils unabhängig durch ein Sauerstoffatom, -CO-, -COO- oder -OCO- ersetzt sein können, so dass Sauerstoffatome nicht direkt miteinander verbunden sind, und ein oder zwei oder mehrere Wasserstoffatome in der Alkylgruppe können jeweils unabhängig durch ein Halogenatom oder eine Trialkoxysilylgruppe mit 3 bis 6 Kohlenstoffatomen ersetzt sein) oder einer der folgenden allgemeinen Formel (I-b) 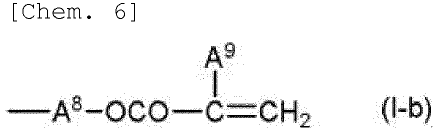
(in der Formel stellt A⁹ ein Wasserstoffatom oder eine Methylgruppe dar,
A⁸ stellt eine Einfachbindung oder eine Alkylengruppe mit 1 bis 15 Kohlenstoffatom(en) dar (worin eine oder zwei oder mehrere Methylengruppen in der Alkylengruppe jeweils unabhängig ersetzt sein können durch ein Sauerstoffatom, -CO-, -COO- oder -OCO-, so dass Sauerstoffatome nicht direkt miteinander verbunden sind, und ein oder zwei oder mehrere Wasserstoffatom(e) in der Alkylengruppe können jeweils unabhängig ersetzt sein durch ein Fluoratom, eine Methylgruppe oder eine Ethylgruppe), und unter B¹, B² und B³, die in einer Gesamtzahl von 2k + 1 anwesend sind, ist die Anzahl der Gruppen, dargestellt durch die allgemeine Formel (I-b) 0 oder 1), und einer Verbindung, dargestellt durch die allgemeine Formel (X1b) 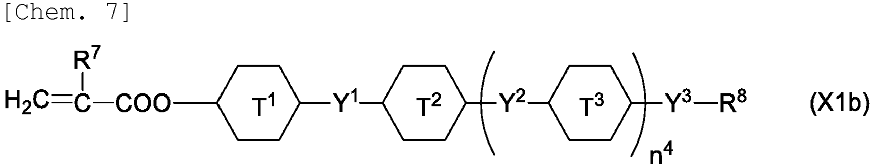
(in der Formel stellt R⁷ ein Wasserstoffatom oder eine Methylgruppe dar;
die 6-gliedrigen Ringe T¹, T² und T³ stellen jeweils unabhängig eine der folgenden Gruppen dar: 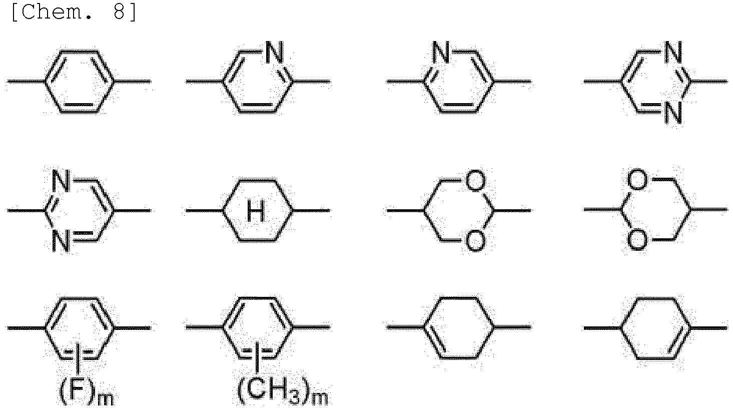
(worin m eine ganze Zahl von 1 bis 4 darstellt);
n⁴ 0 oder 1 darstellt;
Y¹ und Y² jeweils unabhängig eine Einfachbindung, -CH₂CH₂-,-CH₂O-, -OCH₂-, -COO-, -OCO-, -C≡C-, -CH=CH-, -CF=CF-, -(CH₂)₄-, -CH₂CH₂CH₂O-, -OCH₂CH₂CH₂-, -CH₂=CHCH₂CH₂- oder -CH₂CH₂CH=CH-darstellen;
Y³ eine Einfachbindung, -COO- oder -OCO- darstellt; und
R⁸ eine Kohlenwasserstoffgruppe mit 1 bis 18 Kohlenstoffatom(en) darstellt), und einer Verbindung, dargestellt durch die allgemeine Formel (X1c) 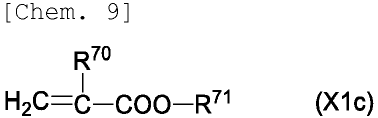
(in der Formel stellt R⁷⁰ ein Wasserstoffatom oder eine Methylgruppe dar, und R⁷¹ stellt eine Kohlenwasserstoffgruppe mit einem kondensierten Ring dar).

3. Flüssigkristallanzeigevorrichtung gemäß Anspruch 1 oder 2, wobei die Pixelelektroden Spalten aufweisen.

4. Flüssigkristallanzeigevorrichtung gemäß Anspruch 1 oder 2, wobei wenigstens eines aus dem ersten Substrat und dem zweiten Substrat eine Struktur zur Spezifizierung einer Pre-Tilt-Richtung aufweist.

5. Flüssigkristallanzeigevorrichtung gemäß einem der Ansprüche 1 bis 4, des Weiteren umfassend einen Passivierungsfilm, der wenigstens entweder zwischen dem ersten Substrat und der Flüssigkristallschicht oder dem zweiten Substrat und der Flüssigkristallschicht angeordnet ist.

6. Flüssigkristallanzeigevorrichtung gemäß einem der Ansprüche 1 bis 5, des Weiteren umfassend einen Planarisierungsfilm, der wenigstens entweder zwischen dem ersten Substrat und der Flüssigkristallschicht oder dem zweiten Substrat und der Flüssigkristallschicht angeordnet ist.

7. Verfahren zur Herstellung einer Flüssigkristallanzeigevorrichtung, umfassend eine Flüssigkristallschicht, welche eine Flüssigkristallzusammensetzung enthält, und zwischen einem ersten Substrat mit einer gemeinsamen Elektrode und einer Farbfilterschicht und einem zweiten Substrat mit einer Mehrzahl von Pixeln und Pixelelektroden der entsprechenden Pixel gehalten wird, wobei jedes der Pixel zwei oder mehr Bereiche mit verschiedenen Pre-Tilt-Richtungen aufweist, wobei das Verfahren umfasst:
Halten zwischen dem ersten Substrat und dem zweiten Substrat ohne einen Ausrichtungsfilm auf einem oder beiden der Substrate bereitzustellen, einer flüssigkristallhaltigen Polymerisationszusammensetzung, enthaltend eine Verbindung, dargestellt durch folgende allgemeine Formel (I) 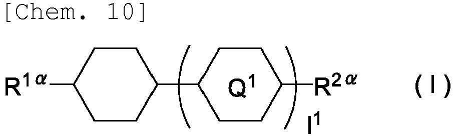 (in der Formel stellen R^{1α} und R^{2α} jeweils unabhängig eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen dar; Q¹ stellt eine 1,4-Phenylengruppe oder eine trans-1,4-Cyclohexylengruppe dar; I¹ stellt 1 oder 2 dar, und wenn I¹ 2 ist, können zwei Q¹ gleich oder verschieden sein) sowie eine durch die folgende allgemeine Formel (II) dargestellte Verbindung 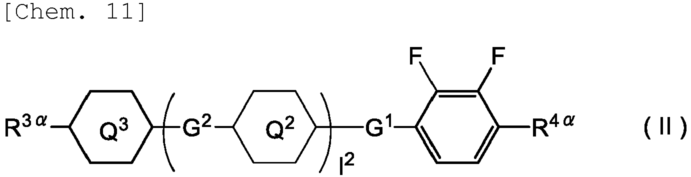
(in der Formel stellt R^{3α} eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen dar; R^{4α} stellt eine Alkylgruppe mit 1 bis 8 Kohlenstoffatom(en), eine Alkenylgruppe mit 4 bis 8 Kohlenstoffatomen, eine Alkoxygruppe mit 1 bis 8 Kohlenstoffatom(en) oder eine Alkenyloxygruppe mit 3 bis 8 Kohlenstoffatomen dar; Q² und Q³ stellen jeweils unabhängig eine 1,4-Phenylengruppe oder eine trans-1,4-Cyclohexylengruppe dar; G¹ und G² stellen jeweils unabhängig eine Einfachbindung, -CH₂CH₂-, -CH₂O-, -OCH₂-, -CF₂O- oder -OCF₂- dar; und I² stellt 0, 1 oder 2 dar, und wenn I² 2 ist, können jeweils zwei aus Q² und G² gleich oder verschieden sein), eine oder mehrere tri- oder höher-funktionelle (Meth)acrylatverbindungen sowie eine oder mehrere di- oder mono-funktionelle (Meth)acrylatverbindungen; sowie
Polymerisieren der zwei oder mehr polymerisierbaren Verbindungen zwischen der Pixelelektrode und der gemeinsamen Elektrode durch Bestrahlung mit aktiven Energiestrahlen während des Anlegens einer Spannung, um den Flüssigkristallmolekülen in der flüssigkristallhaltigen Polymerisationszusammensetzung einen Pre-Tilt-Winkel zu verleihen, und gleichzeitig Bilden einer Ausrichtungskontrollschicht zwischen der Flüssigkristallschicht und jedem aus dem ersten Substrat und dem zweiten Substrat durch Verwenden der flüssigkristallhaltigen Polymerisationszusammensetzung als die Flüssigkristallzusammensetzung.

8. Verfahren zur Herstellung einer Flüssigkristallanzeigevorrichtung gemäß Anspruch 7, wobei die aktive Energiestrahlung ultraviolettes Licht mit einer Vielzahl an Spektren ist.

9. Verfahren zur Herstellung einer Flüssigkristallanzeigevorrichtung gemäß Anspruch 7 oder 8, wobei die Pixelelektroden Spalten aufweisen, oder wenigstens eines aus dem ersten Substrat und dem zweiten Substrat eine Struktur zur Spezifizierung einer Pre-Tilt-Richtung aufweist.

## Revendications

1. Dispositif d'affichage à cristaux liquides comprenant une couche de cristaux liquides contenant une composition de cristaux liquides et qui est maintenue entre un premier substrat ayant une électrode commune et un second substrat comportant une pluralité de pixels et des électrodes de pixel des pixels respectifs,
dans lequel l'un du premier substrat et du second substrat, ou les deux ont, sans avoir un film d'alignement, une couche de commande d'alignement formée en utilisant un ou plusieurs composés de (méth)acrylate trifonctionnels ou plus et un ou plusieurs composés de (méth)acrylate bi- ou monofonctionnels ; et
la composition de cristaux liquides contient un composé représenté par la formule générale (I) ci-dessous 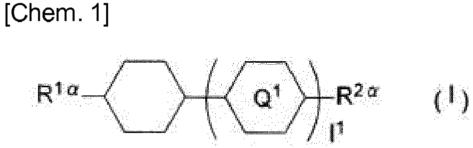 (dans la formule, R^{1α} et R^{2α} représentent chacun indépendamment un groupe alkyle ayant 1 à 8 atomes de carbone, un groupe alcényle ayant 2 à 8 atomes de carbone, un groupe alcoxy ayant 1 à 8 atomes de carbone ou un groupe alcényloxy ayant 2 à 8 atomes de carbone ; Q¹ représente un groupe 1,4-phénylène ou un groupe trans-1,4-cyclohexylène ; I¹ représente 1 ou 2, et lorsque I¹ représente 2, deux Q¹ peuvent être identiques ou différents) et un composé représenté par la formule générale (II) ci-dessous 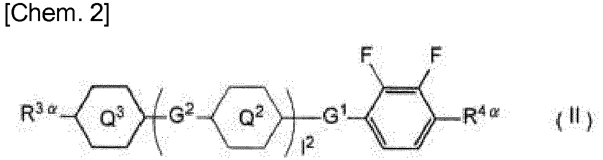 (dans la formule, R^{3α} représente un groupe alkyle ayant 1 à 8 atomes de carbone, un groupe alcényle ayant 2 à 8 atomes de carbone, un groupe alcoxy ayant 1 à 8 atomes de carbone ou un groupe alcényloxy ayant 2 à 8 atomes de carbone ; R^{4α} représente un groupe alkyle ayant 1 à 8 atomes de carbone, un groupe alcényle ayant 4 à 8 atomes de carbone, un groupe alcoxy ayant 1 à 8 atomes de carbone ou un groupe alcényloxy ayant 3 à 8 atomes de carbone, Q² et Q³ représente chacun indépendamment un groupe 1,4-phénylène ou un groupe trans-1,4-cyclohexylène ; G¹ et G² représentent chacun indépendamment une liaison simple, -CH₂CH₂-, -CH₂O-, -OCH₂-, -CF₂O- ou -OCF₂-, I² représente 0, 1 ou 2, et lorsque I² est 2, deux de chaque Q² et G² peuvent être identiques ou différents).

2. Dispositif d'affichage à cristaux liquides selon la revendication 1, dans lequel les composés de (méth)acrylate trifonctionnels ou plus sont chacun un composé représenté par la formule générale (XOa), 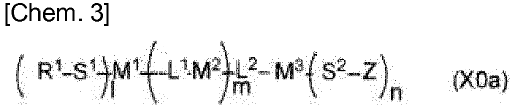
(dans la formule, Z représente un atome d'hydrogène, un groupe alkyle ayant 1 à 8 atomes de carbone, un groupe alkyle halogéné ayant 1 à 8 atomes de carbone, un groupe alcoxy ayant 1 à 8 atomes de carbone, un groupe alcoxy halogéné ayant 1 à 8 atomes de carbone, un halogène, un groupe cyano, un groupe nitro ou R² ; S¹ et S² représentent chacun indépendamment un groupe alkylène ayant 1 à 12 atomes de carbone ou une simple liaison, un -CH₂-ou deux -CH₂- non adjacents ou plus dans le groupe alkylène peuvent être substitués par -O-, -COO-, -OCO- ou -OCOO- ;
R¹ et R² représentent chacun indépendamment un atome d'hydrogène ou l'une quelconque de la formule (R-1) à la formule (R-15), 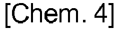 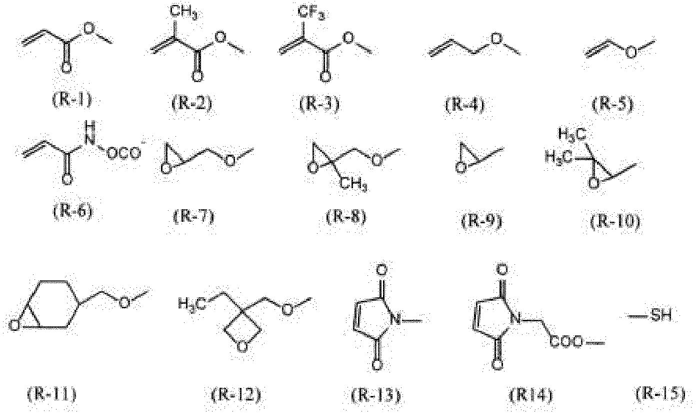
L¹ et L² représentent chacun indépendamment une simple liaison, -O-, -S-, -CH₂-, -OCH₂-, -CH₂O-, -CO-, -C₂H₄-, -COO-, -OCO-, - OCOOCH₂-, -CH₂OCOO-, -OCH₂CH₂O-, -CO-NR^{a}-, -NR^{a}-CO-, -SCH₂-, -CH₂S-, - CH=CR^{a}-COO-, -CH=CR^{a}-OCO, -COO-CR^{a}=CH-, -OCO-CR^{a}=CH-, -COO-CR^{a}=CH-COO-, -COO-CR^{a}=CH-OCO-, -OCO-CR^{a}=CH-COO-, -OCO-CR^{a}=CH-OCO-, -COOC₂H₄-, -OCO₂H₄-, -C₂H₄OCO-, -(CH₂)ⱼ-C(=O)-O-, -(CH2)ⱼ-O-(C=O)-, - O-(C=O)-(CH₂)ⱼ-, -(C=O)-O-(CH₂)ⱼ-, -CH₂OCO-, -COOCH₂-, -OCOCH₂-, -CH=CH-, -CF=CF-, -CF=CH-, -CH=CF-, -CF₂-, - CF₂O-, -OCF₂-, -CF₂CH₂-, -CH₂CF₂-, - CF₂CF₂- ou -C≡C- (où R^{a} représente indépendamment un atome d'hydrogène ou un groupe alkyle ayant 1 à 4 atomes de carbone, et j représente un nombre entier de 1 à 4) ;
M¹ et M³ représentent chacun indépendamment un cycle aromatique ou un cycle aliphatique ;
M² représente un groupe 1,4-phénylène, un groupe 1,4-cyclohexylène, un groupe pyridine-2,5-diyle, un groupe pyrimidine-2,5-diyle, un groupe naphtalène-2,6-diyle, un groupe naphtalène-1,4-diyle, un groupe tétrahydronaphtalène-2,6-diyle ou un groupe 1,3-dioxane-2,5-diyle ;
M¹, M² et M³ peuvent chacun être indépendamment non substitués ou substitués par un groupe alkyle ayant 1 à 8 atomes de carbone, un groupe alkyle halogéné ayant 1 à 8 atomes de carbone, un groupe alcoxy ayant 1 à 8 atomes de carbone, un halogène, un groupe cyano ou un groupe nitro ;
l et n représentent chacun indépendamment un nombre entier égal à 0, 1, 2 ou 3, l + n représente 3 ou plus, lorsque l représente 0 ; Z représente l'un quelconque des groupes de la formule (R-1) à la formule (R-15), et lorsque n représente 0, R¹ représente l'un quelconque des groupes de la formule (R-1) à la formule (R-15) ;
m représente un entier de 0 à 4, quand une pluralité de chacun de R¹, R², Z, S¹ et S² sont présents, ils peuvent être identiques ou différents, quand une pluralité de chacun de L¹ et M² sont présents, ils peuvent identiques ou différents, et au moins un L¹ représente une simple liaison) ; et
les composés de (méth)acrylate bi- ou monofonctionnels sont chacun un composé choisi dans le groupe constitué par un composé représenté par la formule générale (X1a), 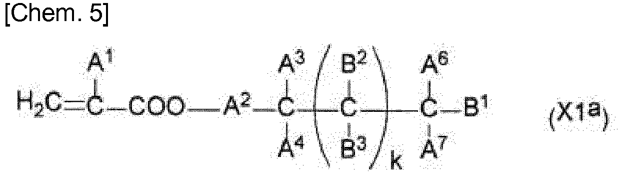
(dans la formule, A¹ représente un atome d'hydrogène ou un groupe méthyle,
A² représente une simple liaison ou un groupe alkylène ayant 1 à 15 atomes de carbone (où un ou plusieurs groupes méthylène dans le groupe alkylène peuvent être chacun indépendamment substitués par un atome d'oxygène, -CO-, -COO- ou -OCO- de sorte que des atomes d'oxygène ne soient pas directement liés les uns aux autres et qu'un ou deux atomes d'hydrogène ou plus dans le groupe alkylène puissent être chacun indépendamment substitués par un atome de fluor, un groupe méthyle ou un groupe éthyle) ;
A³ et A⁶ représentent chacun indépendamment un atome d'hydrogène, un atome d'halogène, ou un groupe alkyle ayant 1 à 18 atomes de carbone (où un ou deux ou plus de deux groupes méthylène dans le groupe alkyle peuvent être chacun indépendamment substitués par un atome d'oxygène, -CO-, -COO- ou -OCO- de sorte que les atomes d'oxygène ne sont pas directement liés les uns aux autres, et un ou deux atomes d'hydrogène ou plus dans le groupe alkyle peuvent être chacun indépendamment substitués par un atome d'halogène ou un groupe alkyle ayant 1 à 17 atomes de carbone) ;
A⁴ et A⁷ représentent chacun indépendamment un atome d'hydrogène, un atome d'halogène, ou un groupe alkyle ayant 1 à 10 atomes de carbone (où un ou deux ou plus de deux groupes méthylène du groupe alkyle peuvent être chacun indépendamment substitués par un atome d'oxygène, -CO-, -COO- ou -OCO- de sorte que les atomes d'oxygène ne sont pas directement liés les uns aux autres, et un ou deux ou plus de deux atomes d'hydrogène dans le groupe alkyle peuvent être chacun indépendamment substitués par un atome d'halogène ou un groupe alkyle ayant 1 à 9 atomes de carbone) ;
k représente 1 à 40 ;
B¹, B² et B³ représentent chacun indépendamment un atome d'hydrogène, un groupe alkyle linéaire ou ramifié ayant 1 à 10 atomes de carbone (où un ou deux ou plus de deux groupes méthylène du groupe alkyle peuvent être chacun indépendamment substitués par un atome d'oxygène, -CO-, -COO- ou -OCO- de sorte que les atomes d'oxygène ne sont pas directement liés les uns aux autres, et un ou deux ou plus de deux atomes d'hydrogène dans le groupe alkyle peuvent être chacun indépendamment substitués par un atome d'halogène ou un groupe trialkoxysilyle ayant 3 à 6 atomes de carbone) ou la formule générale (I-b) ci-dessous, 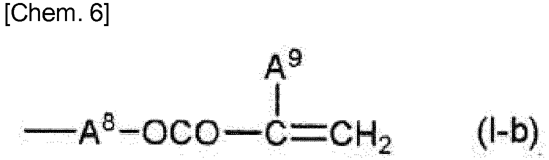
(dans la formule, A⁹ représente un atome d'hydrogène ou un groupe méthyle,
A⁸ représente une simple liaison ou un groupe alkylène ayant 1 à 15 atomes de carbone (où un ou deux ou plus de deux groupes méthylène dans le groupe alkylène peuvent être chacun indépendamment substitués par un atome d'oxygène, -CO-, -COO- ou -OCO- de sorte que les atomes d'oxygène ne sont pas directement liés les uns aux autres, et un ou plusieurs atomes d'hydrogène du groupe alkylène peuvent être chacun indépendamment substitués par un atome de fluor, un groupe méthyle ou un groupe éthyle), et parmi B¹, B², et B³ présents sur un total de 2k+1, le nombre de groupes représentés par la formule générale (I-b) est égal à 0 ou 1), et un composé représenté par la formule générale (X1b). 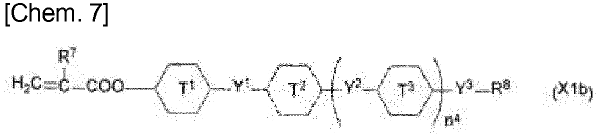
(dans la formule, R⁷ représente un atome d'hydrogène ou un groupe méthyle ;
les cycles T¹, T² et T³ à 6 membres représentent chacun indépendamment l'un des éléments suivants : 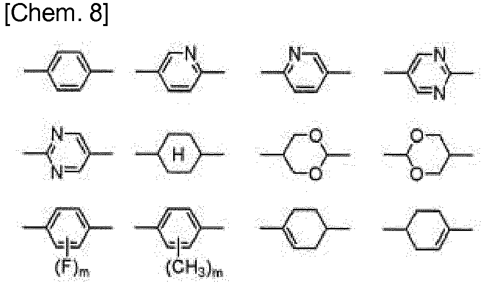
(où m représente un entier de 1 à 4) ;
n⁴ représente 0 ou 1 ;
Y¹ et Y² représentent chacun indépendamment une simple liaison, -CH₂CH₂-, -CH₂O-, -OCH₂-, -COO-, -OCO-, -C=C-, -CH=CH-, -CF=CF-, - (CH₂)₄-, -CH₂CH₂CH₂O-, -OCH₂CH₂CH₂-, -CH₂=CHCH₂CH₂- ou - CH₂CH₂CH=CH- ;
Y³ représente une simple liaison, -COO- ou -OCO- ; et
R⁸ représente un groupe hydrocarboné ayant 1 à 18 atomes de carbone) et un composé représenté par la formule générale (X1c), 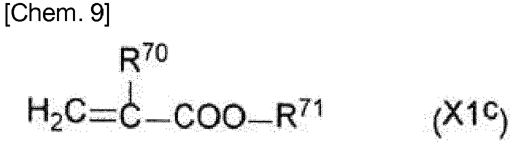
(dans la formule, R⁷⁰ représente un atome d'hydrogène ou un groupe méthyle, et R⁷¹ représente un groupe hydrocarboné ayant un cycle condensé).

3. Dispositif d'affichage à cristaux liquides selon la revendication 1 ou 2, dans lequel les électrodes de pixel ont des fentes.

4. Dispositif d'affichage à cristaux liquides selon la revendication 1 ou 2, dans lequel au moins l'un du premier substrat et du second substrat a une structure pour spécifier une direction de pré-inclinaison.

5. Dispositif d'affichage à cristaux liquides selon l'une quelconque des revendications 1 à 4, comprenant en outre un film de passivation prévu au moins soit entre le premier substrat et la couche de cristaux liquides, soit entre le second substrat et la couche de cristaux liquides.

6. Dispositif d'affichage à cristaux liquides selon l'une quelconque des revendications 1 à 5, comprenant en outre un film de planarisation prévu au moins soit entre le premier substrat et la couche de cristaux liquides, soit entre le second substrat et la couche de cristaux liquides.

7. Procédé de fabrication d'un dispositif d'affichage à cristaux liquides incluant une couche de cristaux liquides qui contient une composition de cristaux liquides et qui est maintenue entre un premier substrat comportant une électrode commune et une couche de filtre de couleur et un second substrat comportant une pluralité de pixels et des électrodes de pixel respectives, chacun des pixels ayant deux régions ou plus ayant des directions de pré-inclinaison différentes, le procédé comprenant les étapes consistant à :
maintenir, entre le premier substrat et le second substrat sans fournir de film d'alignement sur l'un des substrats ou les deux, une composition de polymérisation contenant des cristaux liquides contenant un composé représenté par la formule générale (I) ci-dessous 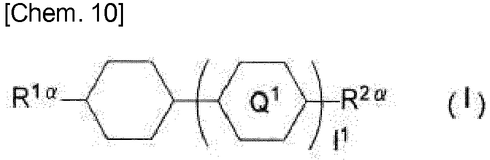 (dans la formule, R^{1a} et R^{2a} représentent chacun indépendamment un groupe alkyle ayant 1 à 8 atomes de carbone, un groupe alcényle ayant 2 à 8 atomes de carbone, un groupe alcoxy ayant 1 à 8 atomes de carbone, ou un groupe alcényloxy ayant 2 à 8 atomes de carbone Q¹ représente un groupe 1,4-phénylène ou un groupe trans-1,4-cyclohexylène ; I¹ représente 1 ou 2, et lorsque I¹ représente 2, deux Q¹ peuvent être identiques ou différents) et un composé représenté par la formule générale (II) ci-dessous 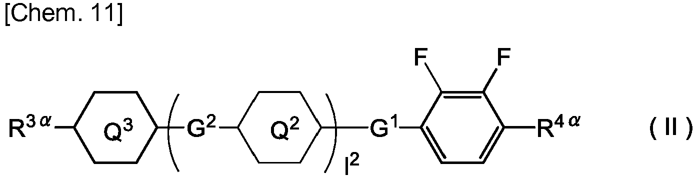
(dans la formule, R^{3α} représente un groupe alkyle ayant 1 à 8 atomes de carbone, un groupe alcényle ayant 2 à 8 atomes de carbone, un groupe alcoxy ayant 1 à 8 atomes de carbone ou un groupe alcényloxy ayant 2 à 8 atomes de carbone ; R^{4α} représente un groupe alkyle ayant 1 à 8 atomes de carbone, un groupe alcényle ayant 4 à 8 atomes de carbone, un groupe alcoxy ayant 1 à 8 atomes de carbone, ou un groupe alcényloxy ayant 3 à 8 atomes de carbone; Q² et Q³ représentent chacun indépendamment un groupe 1,4-phénylène ou un groupe trans-1,4-cyclohexylène ; G¹ et G² représentent chacun indépendamment une simple liaison, -CH₂CH₂-, -CH₂O-, -OCH₂-, -CF₂O-, ou -OCF₂- et I² représente 0, 1 ou 2, et lorsque I² est égal à 2, deux de chaque Q² et G² peuvent être identiques ou différents), un ou plusieurs composés de (méth)acrylate trifonctionnels ou plus, et un ou plusieurs composés de (méth)acrylate bi- ou monofonctionnels ; et
polymériser les deux composés polymérisables ou plus entre l'électrode de pixel et l'électrode commune par irradiation avec des rayons d'énergie active tout en appliquant une tension pour donner un angle de pré-inclinaison aux molécules de cristaux liquides dans la composition de polymérisation contenant des cristaux liquides et, en même temps, former une couche de commande d'alignement entre la couche de cristaux liquides et chacun du premier substrat et du second substrat en utilisant la composition de polymérisation contenant des cristaux liquides en tant que composition de cristaux liquides.

8. Procédé de fabrication d'un dispositif d'affichage à cristaux liquides selon la revendication 7, dans lequel le rayon d'énergie active est une lumière ultraviolette ayant une pluralité de spectres.

9. Procédé de fabrication d'un dispositif d'affichage à cristaux liquides selon la revendication 7 ou 8, dans lequel les électrodes de pixel ont des fentes, ou au moins l'un du premier substrat et du second substrat a une structure pour spécifier une direction de pré-inclinaison.
